(19) Europäisches Patentamt
European Patent Office
Office européen des brevets

(11) Veröffentlichungsnummer: **0 365 962 B1**

(12) **EUROPÄISCHE PATENTSCHRIFT**

(45) Veröffentlichungstag der Patentschrift: **21.09.94**

(51) Int. Cl.5: **C09K 19/30**, C09K 19/42, G02F 1/137

(21) Anmeldenummer: **89119155.3**

(22) Anmeldetag: **16.10.89**

(54) **Matrix-Flüssigkristallanzeige.**

(30) Priorität: **20.10.88 DE 3835730**
**15.03.89 DE 3908403**
**13.07.89 DE 3923044**

(43) Veröffentlichungstag der Anmeldung:
**02.05.90 Patentblatt 90/18**

(45) Bekanntmachung des Hinweises auf die Patenterteilung:
**21.09.94 Patentblatt 94/38**

(84) Benannte Vertragsstaaten:
**ES**

(56) Entgegenhaltungen:
**EP-A- 0 261 614** **EP-A- 0 332 005**
**WO-A-88/09360** **WO-A-89/03867**
**WO-A-89/08692** **DE-A- 3 221 462**

(73) Patentinhaber: **MERCK PATENT GmbH**
**Postfach,**
**Frankfurter Strasse 250**
**D-64271 Darmstadt (DE)**

(72) Erfinder: **Weber, Georg**
**Wilhelm-Leuschner-Strasse 38**
**D-6106 Erzhausen (DE)**
Erfinder: **Pohl, Ludwig, Dr.**
**Niebergallweg 5**
**D-6100 Darmstadt (DE)**
Erfinder: **Hittich, Reinhard, Dr.**
**Am Kirchberg 11**
**D-6101 Modautail 1 (DE)**
Erfinder: **Plach, Herbert, Dr.**
**Wingertsberg 5**
**D-6100 Darmstadt (DE)**
Erfinder: **Scheuble, Bernhard, Dr.**
**Bluff 100**
**100-1, Yamate-cho**
**Naka-ku**
**Yokohama-shi Kanagawa 231 (JP)**
Erfinder: **Oyama, Takamasa**
**Komachi corp. 207**
**2-1-3 Fukami-nishi**
**Kanagawa (JP)**
Erfinder: **Rieger, Bernhard, Dr.**
**Hauptstrasse 31a**
**D-6115 Münster-Altheim (DE)**
Erfinder: **Kurmeier, Hans-Adolf, Dr.**
**Hinter der Schule 3a**
**D-6104 Seeheim-Jugenheim (DE)**
Erfinder: **Bartmann, Ekkehard, Dr.**
**Dieburger Strasse 12a**
**D-6106 Erzhausen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft eine Matrix-Flüssigkristallanzeige mit

- zwei planparallelen Trägerplatten, die mit einer Umrandung eine Zelle bilden,
- integrierten nicht-linearen Elementen zur Schaltung einzelner Bildpunkte auf den Trägerplatten und
- einer in der Zelle befindlichen nematischen Flüssigkristallmischung mit positiver dielektrischer Anisotropie und hohem spezifischem Widerstand,

wobei die Flüssigkristallmischung auf folgenden Komponenten basiert:

a) mindestens 10 Gew.% einer flüssigkristallinen Komponente B bestehend aus einer oder mehreren Verbindungen mit einer dielektrischen Anisotropie von über +1,5,

b) bis zu 90 Gew.% einer flüssigkristallinen Komponente A bestehend aus einer oder mehreren Verbindungen mit einer dielektrischen Anisotropie von -1,5 bis +1,5 der allgemeinen Formel I

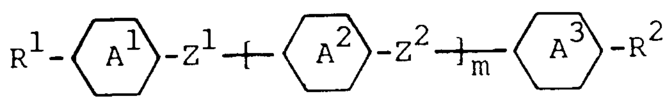 I

worin

| | |
|---|---|
| $R^1$ und $R^2$ | jeweils unabhängig voneinander n-Alkyl, ω-Fluoralkyl oder n-Alkenyl mit bis zu 9 C-Atomen, |
| die Ringe $A^1$, $A^2$ und $A^3$ | jeweils unabhängig voneinander 1,4-Phenylen, 2- oder 3-Fluor-1,4-phenylen, trans-1,4-Cyclohexylen oder 1,4-Cyclohexenylen, |
| $Z^1$ und $Z^2$ | jeweils unabhängig voneinander $-CH_2CH_2-$oder eine Einfachbindung, |

und

m 0, 1 oder 2 bedeutet, und

c) 0 bis 20 Gew.% einer flüssigkristallinen Komponente C bestehend aus einer oder mehreren Verbindungen mit einer dielektrischen Anisotropie von unter -1,5,

und die nematische Flüssigkristallmischung einen nematischen Phasenbereich von mindestens 60 °C, eine Viskosität bei 20 °C von maximal 30 mPa.s und eine mittlere Dielektrizitätskonstante $\bar{\epsilon} \leq 8$ aufweist.

Matrix-Flüssigkristallanzeigen (MFK-Anzeigen) gemäß des Oberbegriffs sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:

1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S.,

SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung.

Der Erfindung liegt die Aufgabe zugrunde, MFK-Anzeigen bereitzustellen, die die oben angegebenen Nachteile nicht oder nur in geringerem Maße und gleichzeitig sehr hohe spezifische Widerstände aufweisen.

Es wurde nun gefunden, daß diese Aufgabe gelöst werden kann, wenn man in diesen Anzeigeelementen nematische Flüssigkristallmischungen verwendet, die auf den o.a. Komponenten A, B und C, B und C, bzw. B basieren.

Gegenstand der Erfindung ist somit eine MFK-Anzeige mit

- zwei planparallelen Trägerplatten, die mit einer Umrandung eine Zelle bilden,
- integrierten nicht-linearen Elementen zur Schaltung einzelner Bildpunkte auf den Trägerplatten und
- einer in der Zelle befindlichen nematischen Flüssigkristallmischung mit positiver dielektrischer Anisotropie und hohem spezifischem Widerstand,

wobei die Flüssigkristallmischung auf folgenden Komponenten basiert:

a) mindestens 10 Gew.% einer flüssigkristallinen Komponente B bestehend aus einer oder mehreren Verbindungen mit einer dielektrischen Anisotropie von über +1,5,

b) bis zu 90 Gew.% einer flüssigkristallinen Komponente A bestehend aus einer oder mehreren Verbindungen mit einer dielektrischen Anisotropie von -1,5 bis +1,5 der allgemeinen Formel I

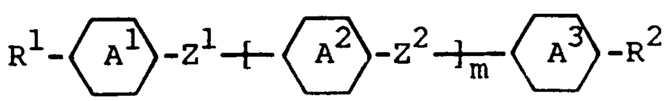 I

worin

| | |
|---|---|
| $R^1$ und $R^2$ | jeweils unabhängig voneinander n-Alkyl, ω-Fluoralkyl oder n-Alkenyl mit bis zu 9 C-Atomen, |
| die Ringe $A^1$, $A^2$, $A^3$ | jeweils unabhängig voneinander 1,4-Phenylen, 2- oder 3-Fluor-1,4-phenylen, trans-1,4-Cyclohexylen oder 1,4-Cyclohexyenylen, |
| $Z^1$ und $Z^2$ | jeweils unabhängig voneinander $-CH_2CH_2-$ oder eine Einfachbindung, |

und

m 0, 1 oder 2 bedeutet, und

c) 0 bis 20 Gew.% einer flüssigkristallinen Komponente C bestehend aus einer oder mehreren Verbindungen mit einer dielektrischen Anisotropie von unter -1,5,

und die nematische Flüssigkristallmischung einen nematischen Phasenbereich von mindestens 60 °C, eine Viskosität bei 20 °C von maximal 30 mPa.s und eine mittlere Dielektrizitätskonstante $\epsilon \leqq 8$ aufweist.

Aus der EP-A 261 614 sind Flüssigkristallzellen mit hochverdrillter Flüssigkristallschicht (z.B. STN-LCDs) basierend auf ähnlichen Gemischen bekannt, wobei die dort beschriebenen Gemische ausschließlich auf nitrilhaltigen, dielektrisch positiven Komponenten basieren.

Gegenstand der Erfindung sind auch entsprechende Flüssigkristallmischungen, deren Komponente B nitrilfreie Verbindungen enthält, insbesondere zur Verwendung in MFK-Anzeigen. Die Mischungen eignen sich jedoch auch für viele andere Anwendungen, wie z.B. TN, STN oder OMI.

Nematische Flüssigkristallmischungen, die anstelle der Verbindungen der Formel I analoge Verbindungen enthalten, worin einer der Reste $R^1$ und $R^2$ n-Alkyl und der andere n-Alkoxy bedeutet, sind bekannt und werden in vielfältigen Ausführungsformen kommerziell genutzt. Diese Flüssigkristallmischungen zeichnen sich jedoch durch zu niedrige Werte für den spezifischen Widerstand aus, wobei die Werte bei 20° oft zwischen $5.10^9$ und $1,1.10^{11}$ Ω cm oder niedriger liegen. Entsprechende MFK-Anzeigen haben für einge kommerzielle Anwendungen zu niedrige Werte für den spezifischen Widerstand.

Der spezifische Widerstand von Flüssigkristallmischungen ist im allgemeinen hoch, wenn die dielektrische Anisotropie klein ist, da die in Mischungen mit hohem $\Delta\epsilon$ vorhandenen polaren Komponenten stabilisierend auf Ionen wirken und somit eine hohe Leitfähigkeit bzw. einen niedrigen Widerstand bedingen.

Es wurde nun überraschend gefunden, daß der spezifische Widerstand dann besonders hoch ist, wenn die mittlere Dielektrizitätskonstante $\bar{\epsilon}$ [= $\frac{1}{3}$ (2 $\epsilon_{\perp}$ + $\epsilon_{||}$)] klein ist und gleichzeitig die dielektrisch neutralen ($\Delta\epsilon$ von -1,5 bis +1,5) Komponenten der Flüssigkristallmischung keine funktionellen Gruppen wie zum Beispiel aromatisch gebundenes Alkoxy oder Ester-Funktionen enthalten. Die dielektrisch positiven ($\Delta\epsilon$ ≧ 1,5) Komponenten tragen üblicherweise terminale Cyan-Gruppen. Vorzugsweise werden in den erfindungsgemäßen Mischungen jedoch neben den Verbindungen mit terminalem Cyan auch solche mit terminalem -NCS, F, Cl, $-CF_3$, $-CHF_2$, $-OCF_3$, $-OCHF_2$, $-OCF_2CF_2H$ oder $-OC_2F_5$ eingesetzt.

Komponente B kann jedoch auch im wesentlichen nur aus nitrilhaltigen Verbindungen bestehen, wobei diejenigen Verbindungen der Formeln IIa bis IIf mit X = CN bevorzugt sind. In diesem Fall besteht die Flüssigkristallmischung im wesentlichen aus den Komponenten A, B und C, bzw. A und B.

Besonders bevorzugt sind Flüssigkristallmischungen enthaltend nitrilhaltige und nitrilfreie, fluorierte Verbindungen, wobei letztere vorzugsweise den Formeln IIa bis IIf entsprechen, worin X F, Cl, $-CF_3$, $-CHF_2$, $-OCF_3$ $-OCHF_2$, $-OCF_2CF_2H$ oder $-OC_2F_5$ bedeutet.

Das Verhältnis nitrilfreie : nitrilhaltige Verbindungen aus Komponente B ist vorzugsweise > 1 : 1, insbesondere > 2 : 1. Besonders bevorzugte Bereiche sind 2,5 : 1 bis 6 : 1.

Ganz besonders bevorzugt sind jedoch Flüssigkristallmischungen, deren Komponente B im wesentlichen aus nitrilfreien, fluorierten Verbindungen besteht. Vorzugsweise kommen die oben genannten bevorzugten Verbindungen der Formeln IIa bis IIf zum Einsatz.

'Im wesentlichen' soll bedeuten, daß der Anteil weiterer Verbindungen in der entsprechenden Komponente ≦ 20 %, insbesondere ≦ 10 % ist.

Weiterhin bevorzugt sind Flüssigkristallmischungen deren Komponente B terminal chlorierte Verbindungen enthält. Derartige Verbindungen sind dem Fachmann bekannt und entsprechen vorzugsweise den Formeln IIa bis IIf mit X = Cl. In einer besonders bevorzugten Ausführungsform enthalten die Mischungen eine oder mehrere Verbindungen der Formel IIa bis IIf, worin $A^2$-X bzw.

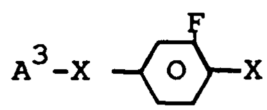

mit X = $CF_3$, $-OCF_3$, $-OCHF_2$ oder Cl bedeutet. Komponente B kann ferner noch 4-kernige Verbindungen enthalten, z.B. entsprechend den Formeln IIc bis IIf, worin einer der Ringe $A^1$ bis $A^3$ doppelt vorhanden ist.

In einer besonders bevorzugten Ausführungsform enthalten die Mischungen Verbindungen mit terminalem Nitril in einem Anteil von 0 bis 50 Gew. % in Komponente B. Besonders bevorzugt sind Mischungen, die keine Verbindungen mit terminalem Nitril enthalten. Überraschenderweise wurde gefunden, daß Gruppen wie $-OCF_3$, $-OCHF_2$, $-OCF_2CF_2H$ oder $-OC_2F_5$ Ionen in den Displays bedeutend weniger stabilisieren als $-OCH_3$ bzw. $-OC_2H_5$. Dasselbe gilt auch für aliphatisch gebundenes Alkoxy (Verbindungen der Formeln III und IV).

Die erfindungsgemäßen Mischungen haben vorzugsweise einen spezifischen Widerstand bei 20° von ≧ $10^{12}$ Ω . cm, insbesondere bevorzugt > $10^{13}$ Ω . cm. Das mittlere $\epsilon$ ist vorzugsweise ≦ 7, insbesondere bevorzugt ≦ 5.

Die Werte der dielektrischen Anisotropie der einzelnen Verbindungen der Komponenten A bis C werden bei 20° bestimmt durch Extrapolation aus einer polaren Mischung (enthaltend 24 % p-trans-4-Propylcyclohexylbenzonitril, 36 % p-trans-4-Pentylcyclohexylbenzonitril, 25 % p-trans-4-Heptylcyclohexylbenzonitril und 15 % 4-Cyan-4'-(trans-4-pentylcyclohexyl)-biphenyl) falls die zu bestimmende Verbindung einen Dipol in der Längsachse des Moleküls enthält, bzw. aus einer neutralen Mischung (enthaltend 22 % trans-1-p-Ethylphenyl-4-propylcyclohexan, 20 % trans-1-p-Methoxyphenyl-1-propylcyclohexan, 15 % trans-1-p-Ethoxyphenyl-4-propylcyclohexan, 19 % 4-Ethyl-4-(trans-4-propylcyclohexyl)-biphenyl, 14 % 4-Ethyl-4'-(trans-4-pentylcyclohexyl)-biphenyl, 5 % 4,4'-Bis-(trans-4-propylcyclohexyl)-biphenyl und 5 % 4-(trans-4-Pentylcyclohexyl)-4'-(trans-4-propylcyclohexyl)-biphenyl) bei neutralen Verbindungen.

Die erfindungsgemäßen Flüssigkristallmischungen ermöglichen es bei niedrigen Viskositäten gleichzeitig einen hohen Wert für den spezifischen Widerstand zu erreichen, wodurch hervorragende MKF-Anzeigen erzielt werden können. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinere dielektrische Anisotropie ausreichend ist. Hierdurch lassen sich unter Verwendung der

erfindungsgemäßen Mischungen im ersten Minimum deutlich höhere spezifische Widerstände verwirklichen.

Die Viskosität bei 20 °C ist vorzugsweise ≦ 25 mPa.s. Der nematische Phasenbereich ist vorzugsweise mindestens 70°, insbesondere mindestens 80°. Vorzugsweise erstreckt sich dieser Bereich mindestens von -20° bis +70°.

Die einzelnen Verbindungen der Formeln I bis IV und deren Unterformeln, die in den erfindungsgemäßen MFK-Anzeigen verwendet werden können, sind entweder bekannt, oder sie können analog zu den bekannten Verbindungen hergestellt werden.

Bevorzugte erfindungsgemäß verwendbare Flüssigkristallmischungen enthalten insgesamt vorzugsweise 10 % bis 90 %, insbesondere 20 % bis 90 % an Verbindungen der Formel I. Falls Komponente B nicht überwiegend aus stark dielektrisch positiven Nitrilkomponenten zusammengesetzt ist, sondern überwiegend nur schwach dielektrisch positive Verbindungen wie zum Beispiel die im folgenden angegebenen fluorierten Verbindungen enthält, kann Komponente A unter Umständen ganz entfallen und die erfindungsgemäßen Mischungen in dieser besonderen Ausführungsform lediglich auf Komponente B und ggf. Komponente C basieren. Besonders bevorzugt sind Flüssigkristallmischungen, deren Komponente B eine oder mehrere Verbindungen ausgewählt aus der Gruppe bestehend aus Verbindungen der Formeln IIa bis IIf enthält,

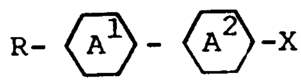 IIa

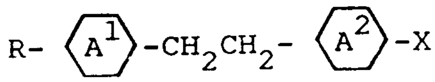 IIb

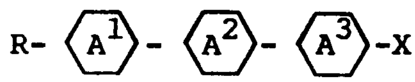 IIc

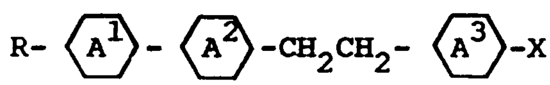 IId

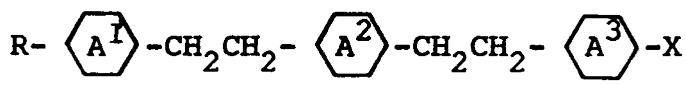 IIe

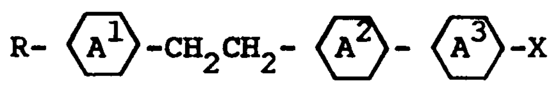 IIf

worin

| | |
|---|---|
| R | n-Alkyl oder n-Alkenyl mit bis zu 9 C-Atomen, |
| X | Cyan, -NCS, F, Cl, $-CF_3$, $-CHF_2$, $-OCF_3$, $-OCHF_2$, $-OCF_2CF_2H$ oder $-OC_2F_5$, und |
| die Ringe $A^1$, $A^2$ und $A^3$ | jeweils unabhängig voneinander 1,4-Phenylen, 2- oder 3-Fluor-1,4-phenylen, 2,3-Difluor-1,4-phenylen, trans-1,4-Cyclohexylen oder 1,4-Cyclohexenylen bedeuten. |

Vorzugsweise enthält Komponente B Verbindungen der Formeln IIa bis IIf, worin X Cyan bedeutet, und Verbindungen der Formeln IIa bis IIf, worin X -NCS, F, Cl, $-CF_3$, $-CHF_2$, $-OCF_3$, $-OCHF_2$, $-OCF_2CF_2H$ oder $-OC_2F_5$ bedeutet, und der Anteil der Cyanverbindungen in Komponente B beträgt 0 bis 50 Gew.%.

In einer besonders bevorzugten Ausführungsform enthält Komponente B keine Verbindungen der Formeln IIa bis IIf, worin X Cyan bedeutet.

In den Verbindungen der Teilformeln IIa bis IIf bedeutet X vorzugsweise F, Cl, $CF_3$, $-OCF_3$, $-OCHF_2$ oder $CHF_2$.

Die Ringe $A^1$, $A^2$ und $A^3$ bedeuten vorzugsweise jeweils unabhangig voneinander trans-1,4-Cyclohexylen oder 1,4-Phenylen. Einer der Ringe $A^1$, $A^2$ und $A^3$ ist in einer bevorzugten Ausführungsform 2- oder 3-Fluor-1,4-phenylen oder 2,3-Difluor-1,4-phenylen. Der mit X verbundene Ring (d.h. $A^2$ in IIa und IIb bzw. $A^3$ in IIc bis IIf) ist vorzugsweise 1,4-Phenylen, welches ggf. auch durch Fluor ein- oder zweifach substituiert sein kann. $A^2$-X bzw. $A^3$-X ist vorzugsweise eine Gruppe ausgewählt an den Formeln (a) bis (h):

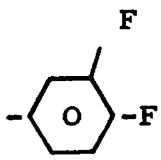
(a)

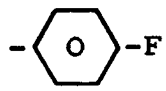
(b)

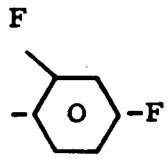
(c)

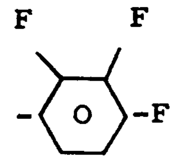
(d)

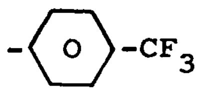
(e)

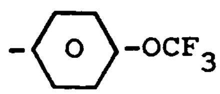
(f)

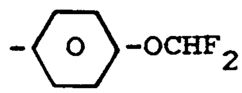
(g)

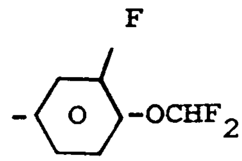
(h)

wobei (a), (b), (d), (f), (g) und (h) besonders bevorzugt sind.

Besonders bevorzugte kleinere Gruppen von Verbindungen sind im folgenden angegeben:

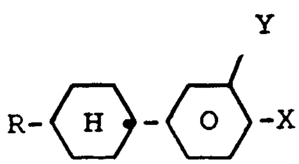
IIa1

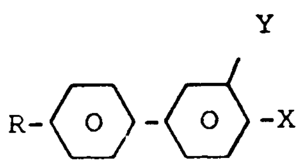
IIa2

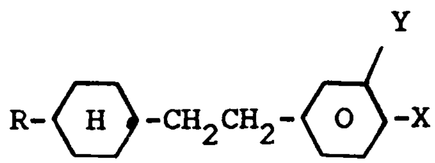

IIb1

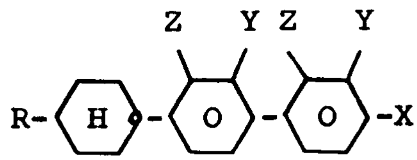

IIc1

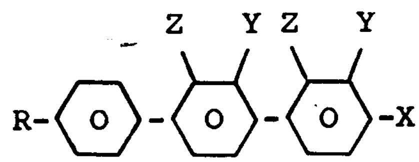

IIc2

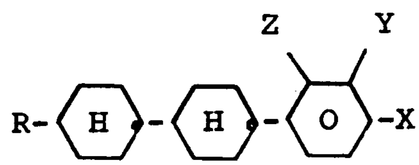

IIc2

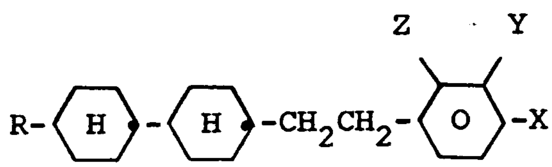

Id1

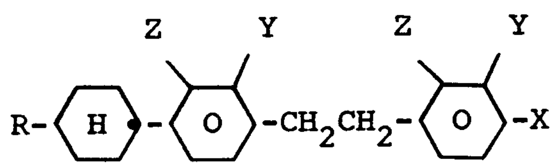

Id2

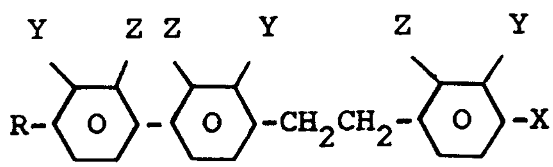

Id3

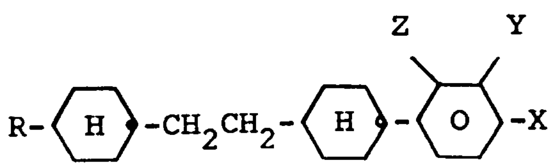

If1

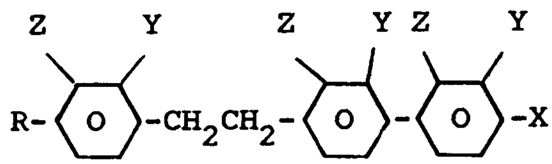

IIf2

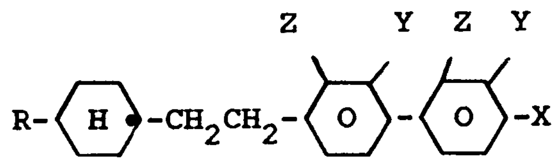

IIf3

In den Teilformeln IIa1 bis IIf3 bedeutet R jeweils n-Alkyl oder n-Alkenyl mit bis zu 9 C-Atomen. Y und Z sind jeweils unabhängig voneinander H oder F, wobei jedoch vorzugsweise einer oder zwei der Reste Y und Z Fluor bedeuten. X ist jedoch vorzugsweise F, Cl, $-CF_3$-, $-OCF_3$ oder $-OCHF_2$.

Komponente B macht vorzugsweise 10 % bis 100 %, insbesondere 20 % bis 80 % der erfindungsgemäßen Mischungen aus.

Komponente A enthält vorzugsweise eine oder mehrere Verbindungen ausgewählt aus der Gruppe bestehend aus II1 bis II7:

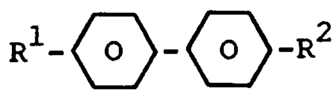

II1

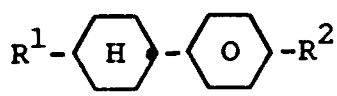

II2

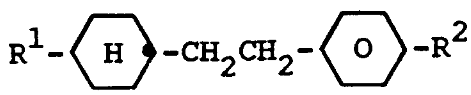

II3

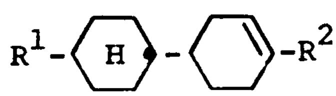

II4

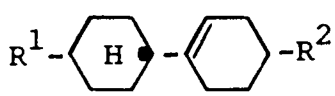

II5

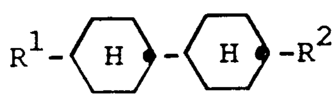

II6

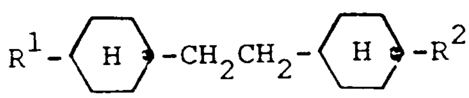

II7

worin $R^1$ und $R^2$ die in Anspruch 1 angegebene Bedeutung haben.

Vorzugsweise enthält Komponente A zusätzlich eine oder mehrere Verbindungen ausgewählt aus der Gruppe bestehend aus II8 bis II20:

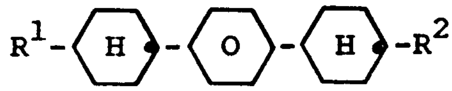 II8

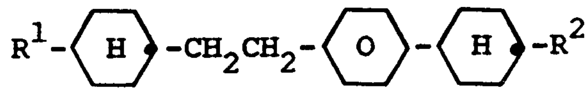 II9

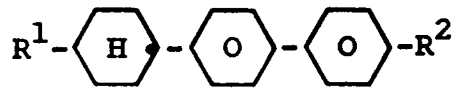 II10

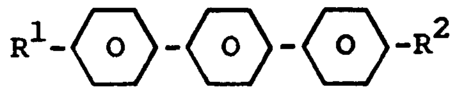 II11

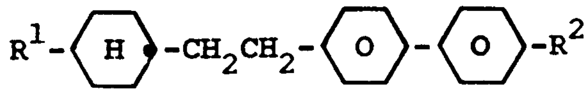 II12

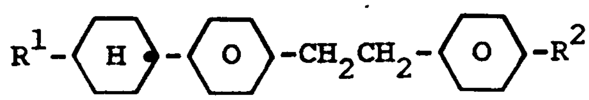 II13

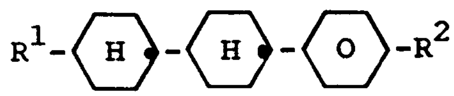 II14

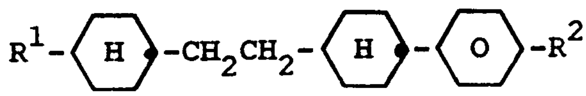 II15

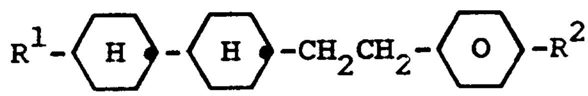 II16

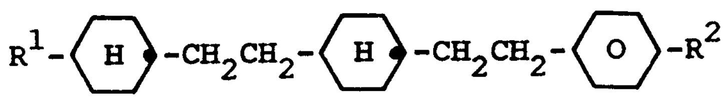 II17

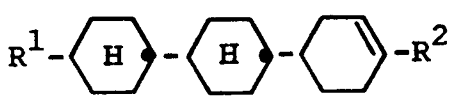 II18

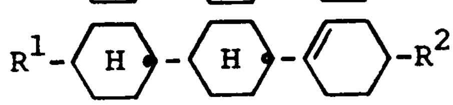 II19

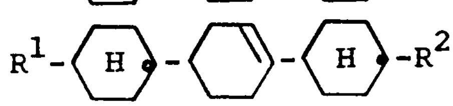 II20

worin $R^1$ und $R^2$ die in Anspruch 1 angegebene Bedeutung haben und die 1,4-Phenylengruppen in II8 bis II17 jeweils unabhängig voneinander auch durch Fluor ein- oder mehrfach substituiert sein können.

Ferner enthält Komponente A vorzugsweise zusätzlich eine oder mehrere Verbindungen ausgewählt aus der Gruppe bestehend aus II21 bis II25 enthält:

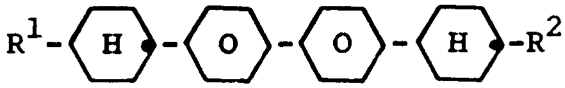
II21

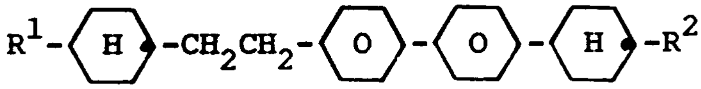
II22

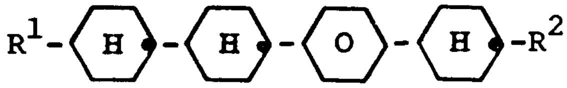
II23

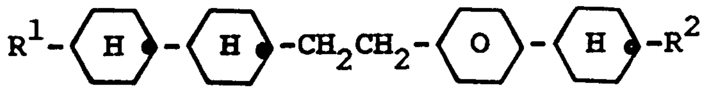
II24

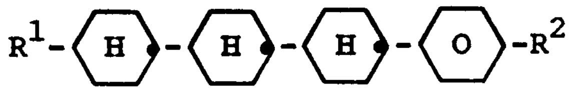
II25

worin $R^1$ und $R^2$ die in Anspruch 1 angegebene Bedeutung haben und die 1,4-Phenylengruppen in II21 bis II25 jeweils unabhängig voneinander auch durch Fluor ein- oder mehrfach substituiert sein können.

Schließlich sind derartige Mischungen bevorzugt, deren Komponente A eine oder mehrere Verbindungen ausgewählt aus der Gruppe bestehend aus II26 und II27 enthält:

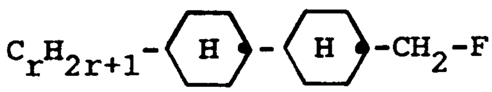
II26

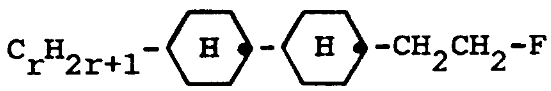
II27

worin $C_rH_{2r+1}$ eine geradkettige Alkylgruppe mit bis zu 7 C-Atomen ist.

In einigen Fällen erweist sich der Zusatz von bindungen der Formel

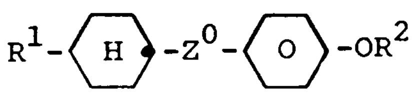

worin

$R^1$ und $R^2$ die in Anspruch 1 angegebene Bedeutung haben

und

$Z^0$ eine Einfachbindung, $-CH_2CH_2-$,

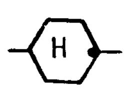

oder

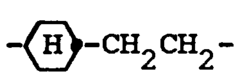

bedeutet,

zur Unterdrückung smektischer Phasen als vorteilhaft, obwohl hierdurch der spezifische Widerstand erniedrigt wird. Zur Erzielung von für die Anwendung optimaler Parameterkombinationen kann der Fachmann leicht feststellen, ob und falls ja in welcher Menge diese Verbindungen zugesetzt sein können. Normalerweise werden weniger als 15 %, insbesondere 5-10 % verwendet.

Ferner bevorzugt sind Flüssigkristallmischungen, die neben den Komponenten A, B und C zusätzlich eine oder mehrere Verbindungen ausgewählt aus der Gruppe bestehend aus III und IV enthalten:

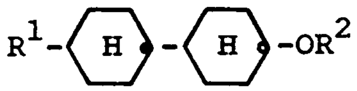 III

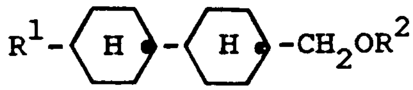 IV

worin $R^1$ und $R^2$ die oben angegebene Bedeutung haben, und/oder eine oder mehrere Verbindungen ausgewählt aus der Gruppe bestehend aus V und VI

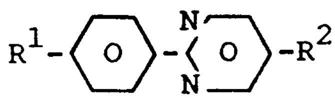 V

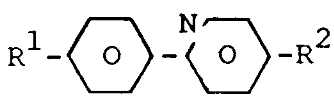 VI

worin $R^1$ und $R^2$ die oben angegebene Bedeutung haben, und/oder eine oder mehrere Verbindungen ausgewählt aus der Gruppe bestehend aus VII bis XI enthalten

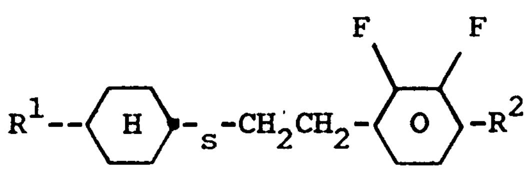 VII

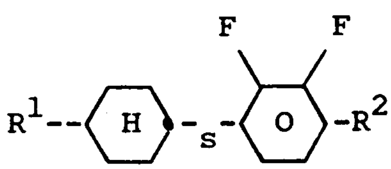 VIII

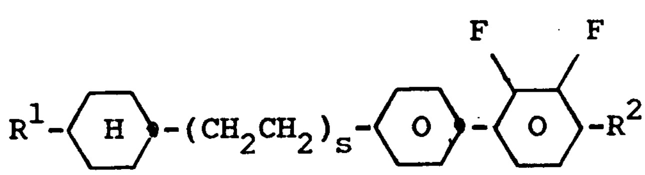 IX

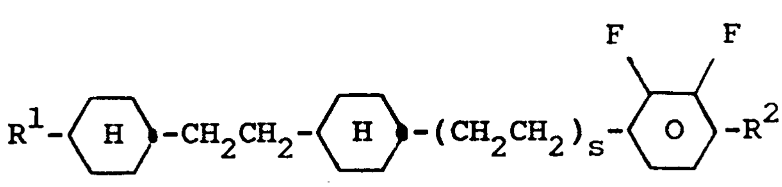 X

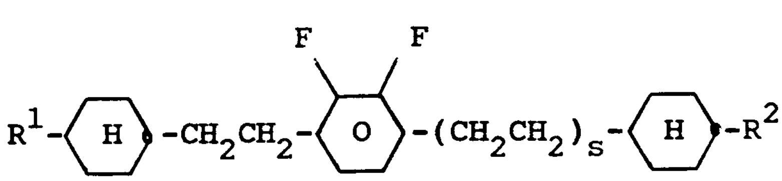 XI

worin $R^1$ und $R^2$ die oben angegebene Bedeutung haben und s 0 oder 1 ist.

Der Anteil der Verbindungen der Formeln III bis XI in den erfindungsgemäßen Mischungen (bevorzugte Bereiche) geht aus folgender Tabelle hervor:

| | |
|---|---|
| Summe der Verbindungen III und IV: | 0 % bis 40 %, vorzugsweise 10 % bis 30 % |
| Summe der Verbindungen V und VI: | 0 % bis 40 %, vorzugsweise 5 % bis 20 % |
| Summe der Verbindungen VII bis XI: | 0 % bis 20 %, vorzugsweise 5 % bis 15 % |

Es versteht sich von selbst, daß die erfindungsgemäßen Mischungen, die vorzugsweise im wesentlichen aus den für die Komponente A bis C angegebenen bevorzugten Verbindungen bestehen, gegebenenfalls auch noch weitere, hier nicht explizit genannte Verbindungen enthalten können. In vielen Fällen resultieren jedoch dann ungünstigere Eigenschaften. Der Fachmann kann leicht feststellen, ob und ggf. in welchen Mengen weitere Verbindungen zum Einsatz kommen können.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

Die folgenden Beispiele sollen die Erfindung erläutern, ohne sie zu begrenzen. Vor und nachstehend sind alle Temperaturen in °C angegeben. Die Prozentzahlen sind Gewichtsprozente.

Beispiel 1

Eine Matrix-Flüssigkristallanzeige vom TFT-Typ enthaltend eine nematische Flüssigkristallmischung bestehend aus

17 % p-trans-4-Propylcyclohexylbenzonitril,
13 % p-trans-4-Butylcyclohexylbenzonitril,
22 % trans-1-p-Propylphenyl-4-pentylcyclohexan,
4 % 1-[trans-4-(trans-4-Propylcyclohexyl)-cyclohexyl]-2-(p-methylphenyl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
9 % 4-Ethyl-4'-(trans-4-propylcyclohexyl)-biphenyl,
9 % E-Ethyl-4'-(trans-4-pentylcyclohexyl)-biphenyl,
4 % 4,4'-Bis-(trans-4-propylcyclohexyl)-2-fluorbiphenyl,
4 % 4,4'-Bis-(trans-4-pentylcyclohexyl)-2-fluorbiphenyl, und
6 % 4-(trans-4-Pentylcyclohexyl)-4'-(trans-4-propylcyclohexyl)-2-fluorbiphenyl

weist einen spezifischen Widerstand von 3 . $10^{12}$ Ω cm auf. Die nematische Mischung zeigt einen Klärpunkt von 91°, eine Viskosität von 18 mPa.s bei 20°, eine mittlere DK von 5,0 und eine optische Anisotropie von 0,118.

Beispiel 2

Eine nematische Mischung bestehend aus

17 % p-trans-4-Propylcyclohexylbenzonitril,
13 % p-trans-4-Butylcyclohexylbenzonitril,
13 % trans,trans-4-Pentyl-4'-fluormethyl-cyclohexylcyclohexan
13 % trans,trans-4-Propyl-4'-fluormethyl-cyclohexylcyclohexan
4 % 1-[trans-4-(trans-4-Propylcyclohexyl)-cyclohexyl]-2-(p-methylphenyl)-ethan,

4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
7 % 4-Ethyl-4′-(trans-4-propylcyclohexyl)-biphenyl,
7 % 4-Ethyl-4′-(trans-4-pentylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-2-fluorbiphenyl, und
6 % 4-(trans-4-Pentylcyclohexyl)-4′-(trans-4-propylcyclohexyl)-2-fluorbiphenyl
zeigt einen Klärpunkt von 93°, eine Viskosität von 19 mPa.s, eine mittlere DK von 5,4, ein $\Delta n$ von 0,107 und einen spezifischen Widerstand von 2,5 . $10^{12}$ Ω cm.

Beispiel 3

Eine nematische Mischung bestehend aus
10 % p-trans-4-Pentylcyclohexyl-fluorbenzol,
17 % trans-1-p-Propylphenyl-4-pentylcyclohexan,
10 % 1-[trans-4-(trans-4-Propylcyclohexyl)-cyclohexyl]-2-(p-trifluormethoxyphenyl)-ethan,
10 % 1-[trans-4-(trans-4-Pentylcyclohexyl)-cyclohexyl]-2-(3,4-difluorphenyl)-ethan,
10 % 1-[trans-4-(trans-4-Propylcyclohexyl)-cyclohexyl]-2-(3,4-difluorphenyl)-ethan,
20 % 1-[trans-4-(trans-4-Propylcyclohexyl)-cyclohexyl]-2-(p-trifluormethoxyphenyl)-ethan,
20 % 1-[trans-4-(trans-4-Pentylcyclohexyl)-cyclohexyl]-2-(p-trifluormethoxyphenyl)-ethan, und
3 % 4-(trans-4-Pentylcyclohexyl)-4′-(trans-4-propylcyclohexyl)-2-fluorbiphenyl
zeigt einen Klärpunkt von 88°, eine Viskosität von 15,2 mPa.s, eine mittlere DK von 4,3, ein $\Delta n$ von 0,078 und einen spezifischen Widerstand von 8,6 . $10^{13}$ Ω cm. Diese Mischung eignet sich besonders gut für den Betrieb im 1. Minimum nach Gooch und Tarry bei einer Schwellenspannung von 2,7 V.

Beispiel 4

Eine nematische Mischung bestehend aus
4 % 4,4′-Bis-(trans-4-propylcyclohexyl)-2-fluorbiphenyl,
10 % p-trans-4-Pentylcyclohexyl-fluorbenzol,
12 % trans-1-p-Propylphenyl-4-pentylcyclohexan,
10 % 1-[trans-4-(trans-4-Propylcyclohexyl)-cyclohexyl]-2-(p-trifluormethylphenyl)-ethan,
10 % 1-[trans-4-(trans-4-Pentylcyclohexyl)-cyclohexyl]-2-(3,4-difluorphenyl)-ethan,
10 % 1-[trans-4-(trans-4-Propylcyclohexyl)-cyclohexyl]-2-(3,4-difluorphenyl)-ethan,
20 % 1-[trans-4-(trans-4-Propylcyclohexyl)-cyclohexyl]-2-(p-trifluormethoxyphenyl)-ethan,
20 % 1-[trans-4-(trans-4-Pentylcyclohexyl)-cyclohexyl]-2-(p-trifluormethoxyphenyl)-ethan, und
4 % 4-(trans-4-Pentylcyclohexyl)-4′-(trans-4-propylcyclohexyl)-2-fluorbiphenyl
zeigt einen Klärpunkt von 91°, ein $\Delta n$ von 0,076, eine mittlere DK von 4,2 und einen spezifischen Widerstand von 7,3 . $10^{13}$ Ω cm.

Beispiel 5

Eine nematische Mischung bestehend aus
13 % p-trans-4-Propylcyclohexylbenzonitril,
8 % p-trans-4-Butylcyclohexylbenzonitril,
15 % trans,trans-4-Pentyl-4′-fluormethyl-cyclohexylcyclohexan,
17 % trans,trans-4-Propyl-4′-fluormethyl-cyclohexylcyclohexan
4 % 1-[trans-4-(trans-4-Propylcyclohexyl)-cyclohexyl]-2-(p-methylphenyl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
9 % 4-Ethyl-4′-(trans-4-propylcyclohexyl)-biphenyl,
8 % 4-Ethyl-4′-(trans-4-pentylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-2-fluorbiphenyl, und
6 % 4-(trans-4-Pentylcyclohexyl)-4′-(trans-4-propylcyclohexyl)-2-fluorbiphenyl
zeigt einen Klärpunkt von 96°, ein $\Delta n$ von 0,103,eine mittlere DK von 4,9 und einen spezifischen

Widerstand von 1,0 . $10^{13}$ Ω cm. Diese Mischung eignet sich besonders gut für den Betrieb im 1. Minimum nach Gooch und Tarry bei einer Schwellenspannung von 2,3 V.

Beispiel 6

Eine nematische Mischung bestehend aus
13 % p-trans-4-Propylcyclohexylbenzonitril,
13 % trans,trans-4-Pentyl-4′-fluormethyl-cyclohexylcyclohexan,
15 % trans,trans-4-Propyl-4′-fluormethyl-cyclohexylcyclohexan,
12 % trans,trans-4-Pentyl-4′-(2-fluorethyl)-cyclohexylcyclohexan,
4 % 1-[trans-4-(trans-4-Propylcyclohexyl)-cyclohexyl]-2-(p-methylphenyl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
9 % 4-Ethyl-4′-(trans-4-propylcyclohexyl)-biphenyl,
8 % 4-Ethyl-4′-(trans-4-pentylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-2-fluorbiphenyl, und
6 % 4-(trans-4-Pentylcyclohexyl)-4′-(trans-4-propylcyclohexyl)-2-fluorbiphenyl
zeigen einen Klärpunkt von 99°, ein Δn von 0,097, eine mittlere DK von 4,1 und einen spezifischen Widerstand von 7,8 . $10^{13}$ Ω cm. Diese Mischung eignet sich besonders gut für den Betrieb im 1. Minimum nach Gooch und Tarry bei einer Schwellenspannung von 2,9 V.

Beispiel 7

Eine nematische Mischung bestehend aus
16 % p-trans-4-Propylcyclohexylbenzonitril,
13 % trans,trans-4-Pentyl-4′-fluormethyl-cyclohexylcyclohexan,
13 % trans,trans-4-Propyl-4′-fluormethyl-cyclohexylcyclohexan,
11 % trans,trans-4-Pentyl-4′-(2-fluorethyl)-cyclohexylcyclohexan,
4 % 1-[trans-4-(trans-4-Propylcyclohexyl)-cyclohexyl]-2-(p-methylphenyl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
9 % 4-Ethyl-4′-(trans-4-propylcyclohexyl)-biphenyl,
8 % 4-Ethyl-4′-(trans-4-pentylcyclohexyl)-biphenyl,
4 % 4,4′-Bis-(trans-4-propylcyclohexyl)-2-fluorbiphenyl,
6 % 4,4′-Bis-(trans-4-pentylcyclohexyl)-2-fluorbiphenyl, und
6 % 4-(trans-4-Pentylcyclohexyl)-4′-(trans-4-propylcyclohexyl)-2-fluorbiphenyl
zeigt einen Klärpunkt von 99,5°, ein Δn von 0,100, eine mittlere DK von 4,2 und einen spezifischen Widerstand von 7,5 . $10^{13}$ Ω cm. Diese Mischung eignet sich besonders gut für den Betrieb im 1. Minimum nach Gooch und Tarry bei einer Schwellenspannung von 2,7 V.

Beispiel 8

Eine nematische Mischung bestehend aus
17 % p-trans-4-Propylcyclohexylbenzonitril,
13 % trans,trans-4-Pentyl-4′-fluormethyl-cyclohexylcyclohexan,
13 % trans,trans-4-Propyl-4′-fluormethyl-cyclohexylcyclohexan,
9 % trans-1-p-Propylphenyl-4-pentylcyclohexan,
4 % 1-[trans-4-(trans-4-Propylcyclohexyl)-cyclohexyl]-2-(p-methylphenyl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
9 % 4-Ethyl-4′-(trans-4-propylcyclohexyl)-biphenyl,
9 % 4-Ethyl-4′-(trans-4-pentylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-2-fluorbiphenyl, und

6 % 4-(trans-4-Pentylcyclohexyl)-4′-(trans-4-propylcyclohexyl)-2-fluorbiphenyl
zeigt einen Klärpunkt von 93,4°, ein Δn von 0,108, eine mittlere DK von 4,4 und einen spezifischen Widerstand von 1,3 . $10^{13}$ Ω cm. Die Viskosität bei 20° ist 18,4 mPa.s.

Beispiel 9

Eine nematische Mischung bestehend aus
17 % p-trans-4-Propylcyclohexylbenzonitril,
13 % trans,trans-4-Pentyl-4′-fluormethyl-cyclohexylcyclohexan,
13 % trans,trans-4-Propyl-4′-fluormethyl-cyclohexylcyclohexan,
11 % trans-1-p-Propylphenyl-4-pentylcyclohexan,
4 % 1-[trans-4-(trans-4-Propylcyclohexyl)-cyclohexyl]-2-(p-methylphenyl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
8 % 4-Ethyl-4′-(trans-4-propylcyclohexyl)-biphenyl,
8 % 4-Ethyl-4′-(trans-4-pentylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-2-fluorbiphenyl, und
6 % 4-(trans-4-Pentylcyclohexyl)-4′-(trans-4-propylcyclohexyl)-2-fluorbiphenyl
zeigt einen Klärpunkt von 89,8°, ein Δn von 0,102, eine mittlere DK von 4,4, einen spezifischen Widerstand von 1,5 . $10^{13}$ Ω cm und eine Viskosität von 18,1 mPa.s.

Beispiel 10

Eine nematische Mischung bestehend aus
8 % p-trans-4-Propylcyclohexyl-fluorbenzol,
7 % p-trans-4-Pentylcyclohexyl-fluorbenzol,
8 % p-trans-4-Hexylcyclohexyl-fluorbenzol,
7 % p-trans-4-Heptylcyclohexyl-fluorbenzol,
5 % 1-[trans-4-(trans-4-Propylcyclohexyl)-cyclohexyl]-2-(2,3′,4′-trifluorbiphenyl-4-yl)-ethan,
5 % 1-[trans-4-(trans-4-Pentylcyclohexyl)-cyclohexyl]-2-(2,3′,4′-trifluorbiphenyl-4-yl)-ethan,
8 % trans,trans-1-(p-Ethylphenyl)-4-propyl-cyclohexylcyclohexan,
7 % trans,trans-1-(p-Propylphenyl)-4-pentyl-cyclohexylcyclohexan,
8 % trans,trans-1-(p-Fluorphenyl)-4-propyl-cyclohexylcyclohexan,
7 % trans,trans-1-(p-Fluorphenyl)-4-pentyl-cyclohexylcyclohexan,
6 % trans-trans-1-(p-Trifluormethoxyphenyl)-4-propyl-cyclohexylcyclohexan,
4 % trans-trans-1-(p-Trifluormethoxyphenyl)-4-pentyl-cyclohexylcyclohexan,
6 % trans-trans-1-[p-(1,1,2,2-tetrafluorethoxy)-phenyl]-4-propyl-cyclohexylcyclohexan,
4 % trans-trans-1-[p-(1,1,2,2-tetrafluorethoxy)-phenyl]-4-pentyl-cyclohexylcyclohexan,
3 % 4,4′-Bis-(trans-4-propylcyclohexyl)-2-fluorbiphenyl,
3 % 4,4′-Bis-(trans-4-pentylcyclohexyl)-2-fluorbiphenyl und
4 % 4-(trans-4-Pentylcyclohexyl)-4′-(trans-4-propylcyclohexyl)-2-fluorbiphenyl
zeigte einen Klärpunkt von 92°, ein Δn von 0,099, eine mittlere DK von 4,1, einen spezifischen Widerstand von 5,4 . $10^{13}$ Ω cm und eine Viskosität von nur 14 mPa.s.

Beispiel 11

Eine nematische Mischung bestehend aus
10 % p-trans-4-Propylcyclohexylbenzonitril,
22 % trans-1-p-Propylphenyl-4-pentylcyclohexan,
5 % 4,4′-Bis-propylbiphenyl,
5 % trans,trans-4-Propyl-4′-methyl-cyclohexylcyclohexan,
4 % 1-[trans-4-(trans-4-Propylcyclohexyl)-cyclohexyl]-2-(p-methylphenyl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
5 % 1,4-Bis-(trans-4-propylcyclohexyl)-benzol,

9 % 4-Ethyl-4'-(trans-4-propylcyclohexyl)-biphenyl,
9 % 4-Ethyl-4'-(trans-4-pentylcyclohexyl)-biphenyl,
5 % 1-(trans-4-Propylcyclohexyl)-2-(4'-ethyl-2'-fluorbiphenyl-4-yl)-ethan,
4 % 4,4'-Bis-(trans-4-propylcyclohexyl)-2-fluorbiphenyl,
4 % 4,4'-Bis-(trans-4-pentylcyclohexyl)-2-fluorbiphenyl und
6 % 4-(trans-4-Pentylcyclohexyl)-4'-(trans-4-propylcyclohexyl)-2-fluorbiphenyl
zeigt einen Klärpunkt von 95°, ein Viskosität von 16 mPa.s, ein Δn von 0,113, eine mittlere DK von 3,8 und einen spezifischen Widerstand von $7.10^{13}$ Ω cm.

Beispiel 12

Eine nematische Mischung bestehend aus
17 % p-trans-4-Propylcyclohexylbenzonitril,
11 % trans-1-p-Propylphenyl-4-pentylcyclohexan,
13 % trans-trans-4-Pentyl-4'-fluormethyl-cyclohexylcyclohexan
13 % trans-trans-4-Propyl-4'-fluormethyl-cyclohexylcyclohexan
4 % 1-[trans-4-(trans-4-Propylcyclohexyl)-cyclohexyl]-2-(p-methylphenyl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
8 % 4-Ethyl-4'-(trans-4-propylcyclohexyl)-biphenyl,
8 % E-Ethyl-4'-(trans-4-pentylcyclohexyl)-biphenyl,
4 % 4,4'-Bis-(trans-4-propylcyclohexyl)-2-fluorbiphenyl,
4 % 4,4'-Bis-(trans-4-pentylcyclohexyl)-2-fluorbiphenyl, und
6 % 4-(trans-4-Pentylcyclohexyl)-4'-(trans-4-propylcyclohexyl)-2-fluorbiphenyl
zeigt einen Klärpunkt von 90°, eine Viskosität von 18 mPa.s und ein Δn von 0,102.

Beispiel 13

Eine nematische Mischung bestehend aus
14 % p-trans-4-Propylcyclohexylbenzonitril,
14 % trans-1-p-Fluorphenyl-4-pentylcyclohexan,
14 % trans-1-p-Fluorphenyl-4-heptylcyclohexan,
10 % trans-1-p-Propylphenyl-4-pentylcyclohexan,
6 % 1-[trans-4-(trans-4-Propylcyclohexyl)-cyclohexyl]-2-(p-fluorphenyl)-ethan,
6 % 1-[trans-4-(trans-4-Pentylcyclohexyl)-cyclohexyl]-2-(p-fluorphenyl)-ethan,
5 % 1-[trans-4-(trans-4-Pentylcyclohexyl)-cyclohexyl]-2-(p-trifluormethylphenyl)-ethan,
5 % 4,4'-Bis-(trans-4-propylcyclohexyl)-biphenyl,
5 % 4,4'-Bis-(trans-4-propylcyclohexyl)-2-fluorbiphenyl,
5 % 4,4'-Bis-(trans-4-pentylcyclohexyl)-2-fluorbiphenyl,
5 % 4,4'-Bis-(trans-4-pentylcyclohexyl)-biphenyl,
5 % 4-(trans-4-Pentylcyclohexyl)-4'-(trans-4-propylcyclohexyl)-biphenyl und
6 % 4-(trans-4-Pentylcyclohexyl)-4'-(trans-4-propylcyclohexyl)-2-fluorbiphenyl
zeigt einen Klärpunkt von 95°, eine Viskosität von 17 mPa.s und ein Δn von 0,105.

Die folgenden Mischungen eignen sich gut für MFK-Anzeigen:

Beispiel 14

Man stellt eine nematische Mischung her bestehend aus:
10 % 1-(trans-4-Pentylcyclohexyl)-2-(4'-fluorbiphenyl-4-yl)-ethan
17 % trans-1-p-Propylphenyl-4-pentylcyclohexan,
10 % 1-[trans-4-(trans-4-Propylcyclohexyl)-cyclohexyl]-2-(p-trifluormethylphenyl)-ethan,
10 % 1-(trans-4-Pentylcyclohexyl)-2-[trans-4-(3,4-difluorphenyl)-cyclohexyl]-ethan,
10 % 1-[trans-4-(trans-4-Propylcyclohexyl)-cyclohexyl]-2-(3,4-difluorphenyl)-ethan,
20 % 1-[trans-4-(trans-4-Propylcyclohexyl)-cyclohexyl]-2-(p-trifluormethoxyphenyl)-ethan,
20 % 1-[trans-4-(trans-4-Pentylcyclohexyl)-cyclohexyl]-2-(p-trifluormethoxyphenyl)-ethan, und
3 % 4-(trans-4-Pentylcyclohexyl)-4'-(trans-4-propylcyclohexyl)-2-fluorbiphenyl.

Beispiel 15

Man stellt eine nematische Mischung her bestehend aus:
4 % 4,4′-Bis-(trans-4-propylcyclohexyl)-2-fluorbiphenyl,
10 % p-trans-4-Pentylcyclohexyl-fluorbenzol,
12 % trans,trans-4-Propyl-4′-methoxymethyl-cyclohexylcyclohexan,
10 % 1-[trans-4-(trans-4-Propylcyclohexyl)-cyclohexyl]-2-(p-trifluormethylphenyl)-ethan,
10 % 1-[trans-4-(trans-4-Pentylcyclohexyl)-cyclohexyl]-2-(3,4-difluorphenyl)-ethan,
10 % 1-[trans-4-(trans-4-Propylcyclohexyl)-cyclohexyl]-2-(3,4-difluorphenyl)-ethan,
20 % 1-[trans-4-(trans-4-Propylcyclohexyl)-cyclohexyl]-2-(p-trifluormethoxyphenyl)-ethan,
20 % 1-[trans-4-(trans-4-Pentylcyclohexyl)-cyclohexyl]-2-(p-trifluormethoxyphenyl)-ethan, und
4 % 4-(trans-4-Pentylcyclohexyl)-4′-(trans-4-propylcyclohexyl)-2-fluorbiphenyl.

Beispiel 16

Man stellt eine nematische Mischungen her bestehend aus:
13 % 1-(trans-4-Propylcyclohexyl)-2-(p-cyanphenyl)-ethan,
8 % p-[trans-4-(trans-4-Pentylcyclohexyl)-cyclohexyl]-benzonitril,
18 % trans,trans-4-Pentyl-4′-fluormethyl-cyclohexylcyclohexan,
17 % trans,trans-4-Propyl-4′-fluormethyl-cyclohexylcyclohexan
4 % 1-(trans-4-Propylcyclohexyl)-2-(trans-4-pentylcyclohexyl)-ethan,
4 % 1-[p-(trans-4-Propylcyclohexyl-phenyl]-2-(trans-4-pentylcyclohexyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
9 % 4-Ethyl-4′-(trans-4-propylcyclohexyl)-biphenyl,
8 % 4-Ethyl-4′-(trans-4-pentylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-2-fluorbiphenyl, und
6 % 4-(trans-4-Pentylcyclohexyl)-4′-(trans-4-propylcyclohexyl)-2-fluorbiphenyl.

Beispiel 17

Man stellt eine nematische Mischung her bestehend aus:
13 % p-trans-4-Propylcyclohexylbenzonitril,
13 % trans,trans-4-Pentyl-4′-fluormethyl-cyclohexylcyclohexan,
15 % trans,trans-4-Propyl-4′-fluormethyl-cyclohexylcyclohexan,
12 % 1-(trans-4-Pentylcyclohexyl)-4-propylcyclohex-1-en,
4 % 1-[trans-4-(trans-4-Pentylcyclohexyl)-cyclohexyl]-4-propylcyclohex-1-en,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
9 % 4-Ethyl-4′-(trans-4-propylcyclohexyl)-biphenyl,
8 % 4-Ethyl-4′-(trans-4-pentylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-2-fluorbiphenyl, und
6 % 4-(trans-4-Pentylcyclohexyl)-4′-(trans-4-propylcyclohexyl)-2-fluorbiphenyl.

Beispiel 18

Man stellt eine nematische Mischung her bestehend aus:
16 % p-trans-4-Propylcyclohexylbenzonitril,
13 % trans,trans-4-Pentyl-4′-fluormethyl-cyclohexylcyclohexan,
13 % trans,trans-4-Propyl-4′-fluormethyl-cyclohexylcyclohexan,
11 % trans,trans-4-Pentyl-4′-(2-fluorethyl)-cyclohexylcyclohexan,
4 % 1-(trans-4-Propylcyclohexyl]-2-(4-pentylbiphenyl-4′-yl)-ethan,
4 % 1-[p-(trans-4-Pentylcyclohexyl)-phenyl]-2-(p-propylphenyl)-ethan,
4 % 1-(trans-4-Pentylcyclohexyl)-2-[trans-4-(p-propylphenyl)-cyclohexyl]-ethan,
4 % 1-[trans-4-(trans-4-Propylcyclohexyl)-cyclohexyl]-2-(p-pentylphenyl)-ethan,

9 % 4-Ethyl-4′-(trans-4-propylcyclohexyl)-biphenyl,
8 % 4-Ethyl-4′-(trans-4-pentylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-2-fluorbiphenyl, und
6 % 4-(trans-4-Pentylcyclohexyl)-4′-(trans-4-propylcyclohexyl)-2-fluorbiphenyl.

Beispiel 19

Man stellt eine nematische Mischung her bestehend aus:
17 % p-trans-4-Propylcyclohexylbenzonitril,
13 % trans,trans-4-Pentyl-4′-ethoxy-cyclohexylcyclohexan,
13 % trans,trans-4-Propyl-4′-fluormethyl-cyclohexylcyclohexan,
9 % trans-1-p-Propylphenyl-4-pentylcyclohexan,
4 % 1-[trans-4-(trans-4-Propylcyclohexyl)-cyclohexyl]-2-(p-methylphenyl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
9 % 4-Ethyl-4′-(trans-4-propylcyclohexyl)-biphenyl,
9 % 4-Ethyl-4′-(trans-4-pentylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-2-fluorbiphenyl, und
6 % 4-(trans-4-Pentylcyclohexyl)-4′-(trans-4-propylcyclohexyl)-2-fluorbiphenyl.

Beispiel 20

Man stellt eine nematische Mischung her bestehend aus:
17 % p-trans-4-Propylcyclohexylbenzonitril,
13 % trans,trans-4-Pentyl-4′-methoxy-cyclohexylcyclohexan,
13 % trans,trans-4-Propyl-4′-propoxy-cyclohexylcyclohexan,
11 % trans-1-p-Propylphenyl-4-pentylcyclohexan,
4 % 1-[trans-4-(trans-4-Propylcyclohexyl)-cyclohexyl]-2-(p-methylphenyl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
8 % 4-Ethyl-4′-(trans-4-propylcyclohexyl)-biphenyl,
8 % 4-Ethyl-4′-(trans-4-pentylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-2-fluorbiphenyl, und
6 % 4-(trans-4-Pentylcyclohexyl)-4′-(trans-4-propylcyclohexyl)-2-fluorbiphenyl.

Beispiel 21

Man stellt eine nematische Flüssigkristallmischung her bestehend aus:
17 % p-trans-4-Propylcyclohexylbenzonitril,
13 % p-trans-4-Butylcyclohexylbenzonitril,
22 % trans-1-p-Propylphenyl-4-pentylcyclohexan,
4 % 1-(trans-4-Propylcyclohexyl)-2-(4-ethyl-2,3-difluorbiphenyl-4′-yl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
9 % 4-Ethyl-4′-(trans-4-propylcyclohexyl)-biphenyl,
9 % 4-Ethyl-4′-(trans-4-pentylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-2-fluorbiphenyl, und
6 % 4-(trans-4-Pentylcyclohexyl)-4′-(trans-4-propylcyclohexyl)-2-fluorbiphenyl.

Beispiel 22

Man stellt eine nematische Mischung her bestehend aus:
15 % p-trans-4-Propylcyclohexylbenzonitril,
11 % p-trans-4-Butylcyclohexylbenzonitril,
11 % trans,trans-4-Pentyl-4′-fluormethyl-cyclohexylcyclohexan
11 % trans,trans-4-Propyl-4′-fluormethyl-cyclohexylcyclohexan
4 % 1-[trans-4-(trans-4-Propylcyclohexyl)-cyclohexyl]-2-(p-methylphenyl)-ethan,
4 % 1-[trans-4-(trans-4-Propylcyclohexyl)-cyclohexyl]-2-(p-ethylphenyl)-ethan,
4 % 1-[trans-4-(trans-4-Propylcyclohexyl)-cyclohexyl]-2-(p-propylphenyl)-ethan,
4 % 1-[trans-4-(trans-4-Propylcyclohexyl)-cyclohexyl]-2-(p-pentylphenyl)-ethan,
4 % 2-p-Fluorphenyl-5-hexylpyrimidin,
4 % 2-p-Fluorphenyl-5-pentylpyridin,
7 % 4-Ethyl-4′-(trans-4-propylcyclohexyl)-biphenyl,
7 % 4-Ethyl-4′-(trans-4-pentylcyclohexyl)-biphenyl,
4 % 4,4′-Bis-(trans-4-propylcyclohexyl)-2-fluorbiphenyl,
4 % 4,4′-Bis-(trans-4-pentylcyclohexyl)-2-fluorbiphenyl, und
6 % 4-(trans-4-Pentylcyclohexyl)-4′-(trans-4-propylcyclohexyl)-2-fluorbiphenyl.

Beispiel 23

Eine nematische Mischung bestehend aus
14 % p-trans-4-Propylcyclohexylbenzonitril,
10 % p-trans-4-Pentylcyclohexyl-fluorbenzol,
10 % p-trans-4-Heptylcyclohexyl-fluorbenzol,
20 % p-trans-4-Pentylcyclohexyl-difluormethoxybenzol,
6 % 1-[trans-4-(trans-4-Propylcyclohexyl)-cyclohexyl]-2-(p-fluorphenyl)-ethan,
6 % 1-[trans-4-(trans-4-Pentylcyclohexyl)-cyclohexyl]-2-(p-fluorphenyl)-ethan,
5 % 1-[trans-4-(trans-4-Propylcyclohexyl)-cyclohexyl]-2-(p-propylphenyl)-ethan,
5 % 4,4′-Bis-(trans-4-propylcyclohexyl)-biphenyl,
4 % 4,4′-Bis-(trans-4-pentylcyclohexyl)-biphenyl,
5 % 4,4′-Bis-(trans-4-pentylcyclohexyl)-2-fluorbiphenyl,
5 % 4,4′-Bis-(trans-4-propylcyclohexyl)-2-fluorbiphenyl,
5 % 4-(trans-4-Pentylcyclohexyl-4′-(trans-4-propylcyclohexyl)-biphenyl und
5 % 4-(trans-4-Pentylcyclohexyl-4′-(trans-4-propylcyclohexyl)-2-fluorbiphenyl
zeigt einen Klärpunkt von 93°, eine Viskosität von 17 mPa.s, ein Δn von 0,105 und einen hohen spezifischen Widerstand.

Beispiel 24

Eine nematische Mischung bestehend aus
10 % p-trans-4-Pentylcyclohexyl-fluorbenzol,
10 % p-trans-4-Hexylcyclohexyl-fluorbenzol,
10 % p-trans-4-Heptylcyclohexyl-fluorbenzol,
20 % p-[trans-4-(trans-4-Propylcyclohexyl)-cyclohexyl]-trifluormethoxybenzol,
10 % 1-[trans-4-(trans-4-Propylcyclohexyl)-cyclohexyl]-2-(p-trifluormethylphenyl)-ethan,
10 % 1-[trans-4-(trans-4-Propylcyclohexyl)-cyclohexyl]-2-(p-trifluormethoxyphenyl)-ethan,
20 % 1-[trans-4-(trans-4-Pentylcyclohexyl)-cyclohexyl]-2-(p-trifluormethoxyphenyl)-ethan und
10 % 4-Trifluormethoxy-4′-(trans-4-pentylcyclohexyl)-biphenyl
zeigt einen Klärpunkt von 80°, ein Δn von 0,079, eine Schwellenspannung $V_{(10/0/20)}$ von 2,27 Volt und eine sehr niedrige Viskosität.

Beispiel 25

Eine nematische Mischung bestehend aus
25 % p-trans-4-Propylcyclohexyl-trifluormethoxybenzol,
20 % 4-Trifluormethoxy-4′-(trans-4-pentylcyclohexyl)-biphenyl,
15 % p-[trans-4-(trans-4-Propylcyclohexyl)-cyclohexyl]-trifluormethoxybenzol,

20 % 1-[trans-4-(trans-4-Propylcyclohexyl-cyclohexyl]-2-(p-trifluormethoxyphenyl)-ethan und
20 % 1-[trans-4-(trans-4-Pentylcyclohexyl-cyclohexyl]-2-(p-trifluormethoxyphenyl)-ethan
zeigt einen Klärpunkt von 54°, ein Δn von 0,088, eine Schwellenspannung $V_{(10/0/20)}$ von 2,18 Volt und eine sehr niedrige Viskosität.

Beispiel 26

Eine nematische Mischung bestehend aus
10 % p-trans-4-Pentylcyclohexyl-fluorbenzol,
10 % p-trans-4-Hexylcyclohexyl-fluorbenzol,
12 % p-trans-4-Hexylcyclohexyl-difluormethoxybenzol,
10 % 1-[trans-4-(trans-4-Propylcyclohexyl]-cyclohexyl)-2-(p-fluorphenyl)-ethan,
11 % 1-[trans-4-(trans-4-Pentylcyclohexyl]-cyclohexyl)-2-(p-fluorphenyl)-ethan,
11 % 1-[trans-4-(trans-4-Propylcyclohexyl]-cyclohexyl)-2-(p-trifluormethoxyphenyl)-ethan,
11 % 1-[trans-4-(trans-4-Pentylcyclohexyl]-cyclohexyl)-2-(p-trifluormethoxyphenyl)-ethan,
11 % 1-[trans-4-(trans-4-Propylcyclohexyl]-cyclohexyl)-2-(p-trifluormethylphenyl)-ethan,
10 % p-[trans-4-(trans-4-Propylcyclohexyl]-trifluormethoxybenzol und
4 % 4,4′-Bis-(trans-4-pentylcyclohexyl)-biphenyl
zeigt eine Klärpunkt von 87°, ein Δn von 0,0798; eine dielektrische Anisotropie von +6,5, eine Schwellenspannung von $V_{(10/0/20)}$ von 2,25 Volt und eine sehr niedrige Viskosität.

Beispiel 27

Eine nematische Mischung bestehend aus
10 % p-trans-4-Propylcyclohexyl-trifluormethoxybenzol,
10 % p-trans-4-Propylcyclohexyl-difluormethoxybenzol,
10 % 1-[trans-4-(trans-4-Pentylcylcohexyl-(cyclohexyl]-2-(p-trifluormethoxyphenyl)-ethan,
10 % 1-[trans-4-(trans-4-Propylcylcohexyl-(cyclohexyl]-2-(p-fluorphenyl)-ethan,
10 % 1-[trans-4-(trans-4-Pentylcylcohexyl-(cyclohexyl]-2-(p-fluorphenyl)-ethan,
10 % 1-[trans-4-(trans-4-Propylcylcohexyl-(cyclohexyl]-2-(p-trifluormethoxyphenyl)-ethan,
15 % 1-[trans-4-(trans-4-Pentylcylcohexyl-(cyclohexyl]-2-(p-trifluormethoxyphenyl)-ethan,
10 % 1-[trans-4-(trans-4-Propylcylcohexyl-(cyclohexyl]-2-(p-trifluormethylphenyl)-ethan,
10 % p-[trans-4-(trans-4-Pentylcylcohexyl-(cyclohexyl]-trifluormethoxybenzol und
5 % 4-Trifluormethoxy-4′-(trans-4-pentylcyclohexyl)-biphenyl
zeigt einen Klärpunkt von 81°, ein Δn von 0,0795, eine Schwellenspannung $V_{(10/0/20)}$ von 2,47 Volt und eine sehr niedrige Viskosität.

Beispiel 28

Eine nematische Mischung bestehend aus
10 % p-trans-4-Propylcyclohexyl-trifluormethoxybenzol,
25 % p-trans-4-Pentylcyclohexyl-difluormethoxybenzol,
15 % p-[trans-4-(trans-4-Propylcyclohexyl)-cyclohexyl]-trifluormethoxybenzol,
15 % 1-[trans-4-(trans-4-Propylcyclohexyl)-cyclohexyl]-2-(p-trifluormethoxyphenyl)-ethan,
15 % 1-[trans-4-(trans-4-Propylcyclohexyl)-cyclohexyl]-2-(p-trifluormethylphenyl)ethan und
20 % 4-Trifluormethoxy-4′-trans-4-pentylcyclohexylbiphenyl
zeigt einen Klärpunkt von 71°, ein Δn von 0,0878, ein Δε von +6,1, eine Schwellenspannung $V_{(10/0/20)}$ von 2,09 Volt und eine Viskosität von 12 mPa.s bei 20 °C.

Beispiel 29

Eine nematische Mischung bestehend aus
10 % p-trans-4-Pentylcyclohexyl-fluorbenzol,
15 % p-trans-4-Hexylcyclohexyl-fluorbenzol,
15 % p-trans-4-Heptylcylcohexyl-fluorbenzol,
20 % p-[trans-4-(trans-4-Propylcyclohexyl)-cyclohexyl]-trifluormethoxybenzol
20 % 1-[trans-4-(trans-4-Propylcyclohexyl)-cyclohexyl]-2-(p-trifluormethoxyphenyl)-ethan und
20 % 1-[trans-4-(trans-4-Pentylcyclohexyl)-cyclohexyl]-2-(p-trifluormethoxyphenyl)-ethan

zeigt einen Klärpunkt von 65°, eine Viskosität von 11 mPa.s bei 20°, ein Δn von 0,074, ein Δε von +5,6 und eine Schwellenspannung $V_{(10/0/20)}$ von 2,06 Volt.

Im folgenden ist die Zusammensetzung der Mischungen der Beispiele 30 bis 58 angegeben, wobei die einzelnen Verbindungen wie folgt codiert sind:

| | |
|---|---|
| PCH-301: | trans-1-p-Methoxyphenyl-4-propylcyclohexan |
| CCH-301: | trans,trans-4-Methoxy-4′-propylcyclohexylcyclohexan |
| CBC-33F: | 4,4′-Bis-(trans-4-propylcyclohexyl)-2-fluorbiphenyl |
| CBC-55F: | 4,4′-Bis-(trans-4-pentylcyclohexyl)-2-fluorbiphenyl |
| CBC-53F: | 4-(trans-4-Pentylcyclohexyl)-4′-(trans-4-propylcylcohexyl)-2-fluorbiphenyl |
| CBC-33: | 4,4′-Bis-(trans-4-propylcyclohexyl)-biphenyl |
| CBC-55: | 4,4′-Bis-(trans-4-pentylcyclohexyl)-biphenyl |
| CBC-53: | 4-(trans-4-Pentylcyclohexyl)-4′-(trans-4-propylcyclohexyl)-biphenyl |
| ECCP-33: | 1-[trans-4-(trans-4-Propylcyclohexyl)-cyclohexyl]-2-(p-propylphenyl)-ethan |
| CCH-51F: | trans,trans-4-Fluormethyl-4′-pentylcyclohexylcyclohexan |
| CCH-31F: | trans,trans-4-Fluormethyl-4′-propylcyclohexylcyclohexan |
| PTP-102: | 4-Methyl-4′-ethoxy-tolan |
| PTP-201: | 4-Methoxy-4′-ethyl-tolan |
| CPTP-301: | 4-(trans-4-Propylcyclohexyl)-4′-methoxy-tolan |
| CPTP-302: | 4-(trans-4-Propylcyclohexyl)-4′-ethoxy-tolan |
| CPTP-303: | 4-(trans-4-Propylcyclohexyl)-4′-propoxy-tolan |
| PCH-5F: | trans-1-p-Fluorphenyl-4-pentylcyclohexan |
| PCH-6F: | trans-1-p-Fluorphenyl-4-hexylcyclohexan |
| PCH-7F: | trans-1-p-Fluorphenyl-4-heptylcyclohexan |
| EPCH-20CF$_3$: | 1-(trans-4-Ethylcyclohexyl)-2-(p-trifluormethoxyphenyl)-ethan |
| EPCH-30CF$_3$: | 1-(trans-4-Propylcyclohexyl)-2-(p-trifluormethoxyphenyl)-ethan |
| EPCH-50CF$_3$: | 1-(trans-4-Pentylcyclohexyl)-2-(p-trifluormethoxyphenyl)-ethan |
| EPCH-70CF$_3$: | 1-(trans-4-Heptylcyclohexyl)-2-(p-trifluormethoxyphenyl)-ethan |
| PCH-30CF$_3$: | trans-1-p-Trifluormethoxyphenyl-4-propylcyclohexan |
| PCH-50CF$_3$: | trans-1-p-Trifluormethoxyphenyl-4-pentylcyclohexan |
| ECCP-30CF$_3$: | 1-[trans-4-(trans-4-Propylcyclohexyl)-cyclohexyl]-2-(p-trifluormethoxyphenyl)ethan |
| ECCP-50CF$_3$: | 1-[trans-4-(trans-4-Pentylcyclohexyl)-cyclohexyl]-2-(p-trifluormethoxyphenyl)-ethan |
| CCP-20CF$_3$: | p-[trans-4-(trans-4-Ethylcyclohexyl)-cyclohexyl]-trifluormethoxybenzol |
| CCP-30CF$_3$: | p-[trans-4-(trans-4-Propylcyclohexyl)-cyclohexyl]-trifluormethoxybenzol |
| CCP-40CF$_3$: | p-[trans-4-(trans-4-Butylcyclohexyl)-cyclohexyl]-trifluormethoxybenzol |
| CCP-50CF$_3$: | p-[trans-4-(trans-4-Pentylcyclohexyl)-cyclohexyl]-trifluormethoxybenzol |
| BCH-30CF$_3$: | 4-Trifluormethoxy-4′-(trans-4-propylcyclohexyl)-biphenyl |
| ECCP-3F.F: | 1-[trans-4-(trans-4-Propylcyclohexyl)-cyclohexyl]-2-(3,4-difluorphenyl)-ethan |
| ECCP-5F.F: | 1-[trans-4-(trans-4-Pentylcyclohexyl)-cyclohexyl]-2-(3,4-difluorphenyl)-ethan |
| CCP-3F.F: | 4-[trans-4-(trans-4-Propylcyclohexyl)-cyclohexyl]-1,2-difluorbenzol |
| CCP-5F.F: | 4-[trans-4-(trans-4-Pentylcyclohexyl)-cyclohexyl]-1,2-difluorbenzol |
| CCP-3F: | 4-[trans-4-(trans-4-Propylcyclohexyl)-cyclohexyl]-fluorbenzol |
| ECCP-3F: | 1-[trans-4-(trans-4-Propylcyclohexyl)-cyclohexyl]-2-(p-fluorphenyl)-ethan |
| ECCP-5F: | 1-[trans-4-(trans-4-Pentylcyclohexyl)-cyclohexyl]-2-(p-fluorphenyl)-ethan |
| CP-3F: | trans-4-(trans-4-Propylcyclohexyl)-cyclohexancarbonsäure-(p-fluorphenylester) |
| CP-5F: | trans-4-(trans-4-Propylcyclohexyl)-cyclohexancarbonsäure]-(p-fluorphenylester) |
| PYP-5F: | 2-p-Fluorphenyl-5-pentylpyrimidin |
| PYP-6F: | 2-p-Fluorphenyl-5-hexylpyrimidin |
| PYP-7F: | 2-p-Fluorphenyl-5-heptylpyrimidin |
| PYP-30CF$_3$: | 2-p-Trifluormethoxyphenyl-5-propylpyrimidin |
| PYP-50CF$_3$: | 2-p-Trifluormethoxyphenyl-5-pentylpyrimidin |
| PYP-70CF$_3$: | 2-p-Trifluormethoxyphenyl-5-heptylpyrimidin |
| PCH-3: | p-trans-4-Propylcyclohexyl-benzonitril |
| PCH-4: | p-trans-4-Butylcyclohexyl-benzonitril |
| PCH-5: | p-trans-4-Pentylcyclohexyl-benzonitril |
| ECCP-3: | 1-[trans-4-(trans-4-Propylcyclohexyl)-cyclohexyl]-2-(p-cyanphenyl)-ethan |
| ECCP-3CF$_3$: | 1-[trans-4-(trans-4-Propylcyclohexyl)-cyclohexyl]-2-(p-trifluormethylphenyl)-ethan |
| ECCP-5CF$_3$: | 1-[trans-4-(trans-4-Pentylcyclohexyl)-cyclohexyl]-2-(p-trifluormethylphenyl)-ethan |
| PYP-5N.F: | 2-(3-Fluor-4-cyanphenyl)-5-pentylpyrimidin |

| | |
|---|---|
| PYP-7N.F: | 2-(3-Fluor-4-cyanphenyl)-5-heptylpyrimidin |
| PCH-30CF$_2$: | trans-1-p-Difluormethoxyphenyl-4-propylcyclohexan |
| PCH-50CF$_2$: | trans-1-p-Difluormethoxyphenyl-4-pentylcyclohexan |
| PCH-3 0CF$_2$: | trans-1-p-Difluormethoxyphenyl-4-propylcyclohexan |
| PCH-53: | trans-1-p-Propylphenyl-4-pentylcyclohexan |

Beispiel 30

| | |
|---|---|
| PCH-301 | 10.00 |
| PCH-7F | 4.00 |
| EPCH-30CF$_3$ | 9.00 |
| EPCH-70CF$_3$ | 5.00 |
| CCP-30CF$_3$ | 13.00 |
| CCP-50CF$_3$ | 12.00 |
| ECCP-30CF$_3$ | 12.00 |
| ECCP-50CF$_3$ | 8.00 |
| ECCP-3F.F | 12.00 |
| ECCP-3F | 8.00 |
| CBC-33F | 2.00 |
| CBC-53F | 3.00 |
| CBC-55F | 2.00 |

Beispiel 31

| | |
|---|---|
| PCH-30CF$_2$ | 9.00 |
| PCH-40CF$_2$ | 8.00 |
| PCH-50CF$_2$ | 9.00 |
| CCH-301 | 7.00 |
| CCP-30CF$_3$ | 13.00 |
| CCP-50CF$_3$ | 12.00 |
| ECCP-30CF$_3$ | 8.00 |
| ECCP-50CF$_3$ | 6.00 |
| ECCP-3F.F | 9.00 |
| ECCP-3F | 6.00 |
| CBC-33F | 5.00 |
| CBC-53F | 4.00 |
| CBC-55F | 4.00 |

Beispiel 32

| | |
|---|---|
| CCH-301 | 7.00 |
| PCH-5F | 12.00 |
| PCH-7F | 9.00 |
| CCP-3OCF$_3$ | 13.00 |
| CCP-50CF$_3$ | 12.00 |
| ECCP-30CF$_3$ | 11.00 |
| ECCP-50CF$_3$ | 8.00 |
| ECCP-3F.F | 12.00 |
| ECCP-3F | 7.00 |
| CBC-33F | 3.00 |
| CBC-53F | 3.00 |
| CBC-55F | 3.00 |

Beispiel 33

| | |
|---|---|
| PCH-5F | 13.0 |
| PCH-7F | 10.0 |
| CCP-30CF$_3$ | 13.0 |
| CCP-40CF$_3$ | 11.0 |
| CCP-50CF$_3$ | 12.0 |
| ECCP-30CF$_3$ | 11.0 |
| ECCP-50CF$_3$ | 8.0 |
| ECCP-3F.F | 9.0 |
| ECCP-5F.F | 6.0 |
| CBC-33F | 3.0 |
| CBC-53F | 2.0 |
| CBC-55F | 2.0 |

Beispiel 34

| | |
|---|---|
| PCH-5F | 11.0 |
| PCH-6F | 4.0 |
| PCH-7F | 10.0 |
| CCP-20CF$_3$ | 9.0 |
| CCP-30CF$_3$ | 13.0 |
| CCP-40CF$_3$ | 7.0 |
| CCP-50CF$_3$ | 11.0 |
| ECCP-30CF$_3$ | 10.0 |
| ECCP-50CF$_3$ | 8.0 |
| ECCP-3F.F | 8.0 |
| CBC-33F | 3.0 |
| CBC-53F | 3.0 |
| CBC-55F | 3.0 |

Beispiel 35

| | |
|---|---|
| PCH-5F | 13.0 |
| PCH-7F | 10.0 |
| CCP-20CF$_3$ | 10.0 |
| CCP-30CF$_3$ | 13.0 |
| CCP-40CF$_3$ | 7.0 |
| CCP-50CF$_3$ | 11.0 |
| ECCP-30CF$_3$ | 11.0 |
| ECCP-3F.F | 10.0 |
| ECCP-3F | 8.0 |
| CBC-33F | 3.0 |
| CBC-53F | 2.0 |
| CBC-55F | 2.0 |

Beispiel 36

| | |
|---|---|
| PCH-5F | 13.0 |
| PCH-7F | 10.0 |
| CCP-20CF$_3$ | 10.0 |
| CCP-30CF$_3$ | 13.0 |
| CCP-40CF$_3$ | 7.0 |
| CCP-50CF$_3$ | 11.0 |
| ECCP-30CF$_3$ | 11.0 |
| ECCP-3F.F | 10.0 |
| ECCP-5F.F | 7.0 |
| CBC-33F | 3.0 |
| CBC-53F | 3.0 |
| CBC-55F | 2.0 |

Beispiel 37

| | |
|---|---|
| PCH-5F | 13.0 |
| PCH-7F | 10.0 |
| CCP-20CF$_3$ | 10.0 |
| CCP-30CF$_3$ | 13.0 |
| CCP-40CF$_3$ | 7.0 |
| CCP-50CF$_3$ | 11.0 |
| ECCP-3F.F | 10.0 |
| ECCP-5F.F | 8.0 |
| ECCP-3F | 11.0 |
| CBC-33F | 3.0 |
| CBC-53F | 2.0 |
| CBC-55F | 2.0 |

Beispiel 38

| | |
|---|---|
| PCH-5F | 12.0 |
| PCH-7F | 10.0 |
| CCP-20CF$_3$ | 11.0 |
| CCP-30CF$_3$ | 13.0 |
| CCP-40CF$_3$ | 7.0 |
| CCP-50CF$_3$ | 12.0 |
| ECCP-30CF$_3$ | 9.0 |
| ECCP-3F.F | 9.0 |
| ECCP-5F.F | 5.0 |
| ECCP-3F | 6.0 |
| CBC-33F | 3.0 |
| CBC-53F | 2.0 |

Beispiel 39

| | |
|---|---|
| PCH-5F | 12.0 |
| PCH-6F | 9.0 |
| PCH-7F | 10.0 |
| CCP-20CF$_3$ | 11.0 |
| CCP-30CF$_3$ | 13.0 |
| CCP-40CF$_3$ | 5.0 |
| CCP-50CF$_3$ | 12.0 |
| ECCP-3F.F | 9.0 |
| ECCP-5F.F | 5.0 |
| ECCP-3F | 5.0 |
| CBC-33F | 3.0 |
| CBC-53F | 3.0 |
| CBC-55F | 3.0 |

Beispiel 40

| | |
|---|---|
| PCH-5F | 12.0 |
| PCH-6F | 8.0 |
| PCH-7F | 10.0 |
| CCP-20CF$_3$ | 11.0 |
| CCP-30CF$_3$ | 13.0 |
| CCP-40CF$_3$ | 5.0 |
| CCP-50CF$_3$ | 12.0 |
| ECCP-3F.F | 11.0 |
| ECCP-5F.F | 8.0 |
| CBC-33F | 4.0 |
| CBC-53F | 3.0 |
| CBC-55F | 3.0 |

Beispiel 41

| | |
|---|---|
| PCH-5F | 10.0 |
| PCH-6F | 5.0 |
| PCH-7F | 7.0 |
| CCP-20CF$_3$ | 11.0 |
| CCP-30CF$_3$ | 13.0 |
| CCP-40CF$_3$ | 6.0 |
| CCP-50CF$_3$ | 11.0 |
| ECCP-30CF$_3$ | 7.0 |
| ECCP-50CF$_3$ | 3.0 |
| ECCP-3F.F | 9.0 |
| ECCP-5F.F | 4.0 |
| ECCP-3F | 7.0 |
| CBC-33F | 3.0 |
| CBC-53F | 2.0 |
| CBC-55F | 2.0 |

Beispiel 42

| | |
|---|---|
| PCH-3 | 19.0 |
| PCH-7F | 7.0 |
| CCP-20CF$_3$ | 11.0 |
| CCP-30CF$_3$ | 13.0 |
| CCP-40CF$_3$ | 6.0 |
| CCP-50CF$_3$ | 12.0 |
| ECCP-30CF$_3$ | 7.0 |
| ECCP-3F.F | 10.0 |
| ECCP-5F.F | 8.0 |
| ECCP-3F | 7.0 |

Beispiel 43

| | |
|---|---|
| PCH-3 | 20.00 |
| PCH-4 | 8.00 |
| PCH-5F | 8.00 |
| PCH-6F | 8.00 |
| PCH-7F | 7.00 |
| ECCP-3F | 7.00 |
| ECCP-5F | 7.00 |
| CP-3F | 12.00 |
| CP-5F | 12.00 |
| ECCP-3 | 11.00 |

Beispiel 44

| | |
|---|---|
| PCH-3 | 20.00 |
| PCH-5F | 9.00 |
| PCH-6F | 9.00 |
| PCH-7F | 9.00 |
| ECCP-3F | 8.00 |
| ECCP-5F | 8.00 |
| CP-3F | 12.00 |
| CP-5F | 12.00 |
| ECCP-3 | 13.00 |

Beispiel 45

| | |
|---|---|
| PCH-3 | 14.00 |
| PCH-5F | 14.00 |
| PCH-7F | 14.00 |
| PCH-53 | 10.00 |
| ECCP-3F | 6.00 |
| ECCP-5F | 6.00 |
| ECCP-3CF$_3$ | 5.00 |
| CBC-33 | 5.00 |
| CBC-53 | 5.00 |
| CBC-55 | 5.00 |
| CBC-33F | 5.00 |
| CBC-53F | 6.00 |
| CBC-55F | 5.00 |

Beispiel 46

| | |
|---|---|
| PCH-5F | 20.00 |
| PCH-6F | 15.00 |
| PCH-7F | 15.00 |
| ECCP-3F | 10.00 |
| ECCP-5F | 10.00 |
| CBC-33 | 5.00 |
| CBC-53 | 5.00 |
| CBC-55 | 5.00 |
| CBC-33F | 5.00 |
| CBC-53F | 5.00 |
| CBC-55F | 5.00 |

Beispiel 47

| | |
|---|---|
| PCH-3 | 24.00 |
| PCH-5F | 9.00 |
| PCH-7F | 8.00 |
| ECCP-3F | 8.00 |
| ECCP-5F | 8.00 |
| ECCP-30CF$_3$ | 11.00 |
| ECCP-50CF$_3$ | 11.00 |
| ECCP-3CF$_3$ | 11.00 |
| ECCP-3 | 10.00 |

Beispiel 48

| | |
|---|---|
| PCH-3 | 24.00 |
| PCH-5F | 7.00 |
| PCH-7F | 6.00 |
| CCH-31F | 6.00 |
| ECCP-3F | 5.00 |
| ECCP-5F | 5.00 |
| ECCP-30CF$_3$ | 11.00 |
| ECCP-50CF$_3$ | 11.00 |
| ECCP-3CF$_3$ | 11.00 |
| ECCP-3 | 4.00 |
| CP-3F | 5.00 |
| CP-5F | 5.00 |

Beispiel 49

| | |
|---|---|
| PCH-3 | 24.00 |
| CCH-31F | 7.00 |
| CCH-51F | 7.00 |
| ECCP-3F | 8.00 |
| ECCP-5F | 8.00 |
| ECCP-30CF$_3$ | 11.00 |
| ECCP-50CF$_3$ | 11.00 |
| ECCP-3CF$_3$ | 11.00 |
| ECCP-3 | 13.00 |

Beispiel 50

| | |
|---|---|
| PYP-5N.F | 5.00 |
| PYP-7N.F | 5.00 |
| PCH-3 | 14.00 |
| PCH-5F | 5.00 |
| CCH-31F | 7.00 |
| CCH-51F | 7.00 |
| ECCP-3F | 5.00 |
| ECCP-5F | 5.00 |
| ECCP-30CF$_3$ | 11.00 |
| ECCP-50CF$_3$ | 11.00 |
| ECCP-3CF$_3$ | 11.00 |
| ECCP-3 | 4.00 |
| CP-3F | 5.00 |
| CP-5F | 5.00 |

Beispiel 51

| | |
|---|---|
| PCH-5F | 10.00 |
| PCH-6F | 12.00 |
| PCH-7F | 12.00 |
| ECCP-3F | 14.00 |
| ECCP-5F | 14.00 |
| CP-3F | 15.00 |
| CP-5F | 15.00 |
| ECCP-3 | 8.00 |

Beispiel 52

| | |
|---|---|
| PCH-5F | 10.00 |
| PCH-6F | 10.00 |
| PCH-7F | 10.00 |
| ECCP-3F | 13.00 |
| ECCP-5F | 14.00 |
| ECCP-3CF$_3$ | 13.00 |
| CP-3F | 15.00 |
| CP-5F | 15.00 |

Beispiel 53

| | |
|---|---|
| PCH-3 | 16.00 |
| PCH-301 | 8.00 |
| CCP-30CF$_3$ | 9.00 |
| CCP-50CF$_3$ | 8.00 |
| ECCP-30CF$_3$ | 8.00 |
| ECCP-50CF$_3$ | 7.00 |
| ECCP-3F.F | 7.00 |
| ECCP-3F | 6.00 |
| ECCP-3CF$_3$ | 7.00 |
| BCH-30CF$_3$ | 7.00 |
| PTP-102 | 4.00 |
| PTP-201 | 4.00 |
| CPTP-301 | 2.00 |
| CPTP-302 | 2.00 |
| CPTP-303 | 3.00 |

Beispiel 54

| | |
|---|---|
| PCH-3 | 18.00 |
| PCH-301 | 8.00 |
| PYP-3F | 5.00 |
| PYP-50CF$_3$ | 5.00 |
| PYP-70CF$_3$ | 5.00 |
| CCP-30CF$_3$ | 9.00 |
| CCP-50CF$_3$ | 8.00 |
| ECCP-30CF$_3$ | 8.00 |
| ECCP-50CF$_3$ | 7.00 |
| ECCP-3F.F | 5.00 |
| ECCP-3F | 5.00 |
| BCH-30CF$_3$ | 7.00 |
| CPTP-301 | 3.00 |
| CPTP-302 | 3.00 |
| CPTP-303 | 4.00 |

Beispiel 55

| | |
|---|---|
| PCH-3 | 20.00 |
| PCH-301 | 10.00 |
| $PCH\text{-}30CF_2$ | 5.60 |
| $PCH\text{-}40CF_2$ | 5.60 |
| $PCH\text{-}50CF_2$ | 5.60 |
| $CCP\text{-}30CF_3$ | 7.00 |
| $CCP\text{-}50CF_3$ | 6.30 |
| $ECCP\text{-}30CF_3$ | 6.30 |
| $ECCP\text{-}50CF_3$ | 5.60 |
| ECCP-3F.F | 5.60 |
| $ECCP\text{-}3CF_3$ | 5.60 |
| $BCH\text{-}30CF_3$ | 7.00 |
| CPTP-301 | 3.50 |
| CPTP-302 | 2.80 |
| CPTP-303 | 3.50 |

Beispiel 56

| | |
|---|---|
| PCH-3 | 20.00 |
| PCH-301 | 10.00 |
| PYP-3F | 5.60 |
| PYP-5F | 5.60 |
| $PYP\text{-}50CF_3$ | 5.60 |
| $PYP\text{-}70CF_3$ | 5.60 |
| $CCP\text{-}30CF_3$ | 7.00 |
| $CCP\text{-}50CF_3$ | 6.30 |
| $ECCP\text{-}30CF_3$ | 6.30 |
| $ECCP\text{-}50CF_3$ | 5.60 |
| ECCP-3F.F | 5.60 |
| $ECCP\text{-}3CF_3$ | 5.60 |
| CPTP-301 | 3.50 |
| CPTP-302 | 3.50 |
| CPTP-303 | 4.20 |

Beispiel 57

| | |
|---|---|
| PCH-3 | 18.00 |
| PCH-5F | 12.00 |
| PCH-6F | 12.00 |
| PCH-7F | 10.00 |
| ECCP-3F | 7.00 |
| ECCP-5F | 7.00 |
| ECCP-33 | 5.00 |
| CBC-33 | 5.00 |
| CBC-53 | 5.00 |
| CBC-55 | 4.00 |
| CBC-33F | 5.00 |
| CBC-53F | 5.00 |
| CBC-55F | 5.00 |

Beispiel 58

| | |
|---|---|
| PCH-3 | 10.00 |
| PCH-5F | 18.00 |
| PCH-6F | 14.00 |
| PCH-7F | 10.00 |
| ECCP-3F | 9.00 |
| ECCP-5F | 7.00 |
| CBC-33 | 5.00 |
| CBC-53 | 6.00 |
| CBC-55 | 5.00 |
| CBC-33F | 5.00 |
| CBC-53F | 6.00 |
| CBC-55F | 5.00 |

Die Eigenschaften der Mischungen aus den Beispielen 30 bis 58 sind in der folgenden Tabelle angegeben:

| Eigenschaft | Beispiel 30 | 31 | 32 | 33 | 34 | 35 | 36 | 37 | 38 |
|---|---|---|---|---|---|---|---|---|---|
| Klärpunkt [°C] | 100 | 101 | 100 | 103 | 100 | 101 | 101 | 100 | 101 |
| Viskosität bei 20° (mPa.s) | 15 | 15 | 15 | | | | | 15 | 15 |
| Δε | +4,0 | +6,6 | +5,9 | | | | | +4,0 | +4,6 |
| $\varepsilon_{\|\|}$ | 7,0 | | | | | | | 6,8 | 7,5 |
| Δn | 0,090 | 0,090 | 0,084 | 0,076 | 0,087 | 0,084 | 0,085 | 0,081 | 0,081 |
| $V_{(10,0,20)}$ [Volt] | 2,44 | 2,40 | 2,57 | 2,52 | 2,27 | 2,29 | 2,20 | 2,26 | 2,27 |

| Eigenschaft | Beispiel 39 | 40 | 41 | 42 | 43 | 44 | 45 | 46 | 47 |
|---|---|---|---|---|---|---|---|---|---|
| Klärpunkt [°C] | 88 | 90 | 102 | 98 | 82 | 84 | 95 | 89 | 87 |
| Viskosität bei 20° (mPa.s) | 14 | 14 | 15 | 17 | 18 | 18 | 17 | 15 | 16 |
| Δε | +4,0 | +4,0 | +3,9 | | +8,0 | +7,3 | +4,6 | +2,7 | +8,7 |
| $\varepsilon_{\|\|}$ | 6,9 | 7,0 | 6,6 | | 11,9 | 11,0 | 7,6 | | 12,1 |
| Δn | 0,081 | 0,079 | 0,081 | 0,090 | 0,094 | 0,090 | 0,105 | 0,093 | 0,094 |
| $V_{(10,0,20)}$ [Volt] | 2,13 | 2,20 | 2,33 | 1,90 | 1,71 | 1,75 | 2,15 | 2,98 | 1,82 |

| Eigenschaft | Beispiel 48 | 49 | 50 | 51 | 52 | 53 | 54 | 55 | 56 | 57 | 58 |
|---|---|---|---|---|---|---|---|---|---|---|---|
| Klärpunkt [°C] | 84 | 101 | 85 | 94 | 94 | 106 | 91 | 81 | 73 | 95 | 94 |
| Viskosität bei 20° (mPa.s) | 16 | 20 | 19 | 17 | 17 | | | | | 17 | |
| Δε | +7,9 | +8,3 | +10,2 | | | +6,9 | +8,1 | +6,5 | +8,7 | +5,2 | |
| $\varepsilon_{\|\|}$ | 11,5 | 11,8 | 14,3 | | | 10,4 | 11,8 | 10,8 | 12,8 | 8,4 | |
| Δn | 0,089 | 0,094 | 0,096 | 0,074 | 0,072 | 0,132 | 0,125 | 0,113 | 0,125 | 0,105 | 0,101 |
| $V_{(10,0,20)}$ [Volt] | 1,86 | 1,98 | 1,56 | 2,42 | 2,58 | 2,51 | 2,12 | 2,15 | 1,85 | 2,03 | 2,23 |

Im folgenden sind weitere erfindungsgemäße Mischungen angegeben:

Beispiel 59

| | |
|---|---|
| CCH-301 | 7.00 |
| PCH-5F | 12.00 |
| PCH-7F | 9.00 |
| CCP-3F.F | 13.00 |
| CCP-5F.F | 12.00 |
| ECCP-30CF$_3$ | 11.00 |
| ECCP-50CF$_3$ | 8.00 |
| ECCP-3F.F | 12.00 |
| ECCP-3F | 7.00 |
| CBC-33F | 3.00 |
| CBC-53F | 3.00 |
| CBC-55F | 3.00 |

Beispiel 60

| | |
|---|---|
| PCH-5F | 13.0 |
| PCH-7F | 10.0 |
| CCP-30CF$_3$ | 13.0 |
| CCP-40CF$_3$ | 11.00 |
| CCP-50CF$_3$ | 12.0 |
| ECCP-30CF$_3$ | 11.0 |
| ECCP-50CF$_3$ | 8.0 |
| CCP-3F.F | 9.0 |
| CCP-5F.F | 6.0 |
| CBC-33F | 3.0 |
| CBC-53F | 2.0 |
| CBC-55F | 2.0 |

Beispiel 61

| | |
|---|---|
| PCH-5F | 11.0 |
| PCH-6F | 4.0 |
| PCH-7F | 10.0 |
| CCP-20CF$_3$ | 9.0 |
| CCP-30CF$_3$ | 13.0 |
| CCP-40CF$_3$ | 7.0 |
| CCP-50CF$_3$ | 11.0 |
| CCP-3F.F | 10.0 |
| CCP-5F.F | 8.0 |
| CCP-3F | 8.0 |
| CBC-33F | 3.0 |
| CBC-53F | 3.0 |
| CBC-55F | 3.0 |

Beispiel 62

| | |
|---|---|
| PCH-3 | 20.0 |
| PCH-4 | 8.0 |
| PCH-5 | 8.0 |
| PCH-6F | 8.0 |
| PCH-7F | 7.0 |
| CCP-3F.F | 7.0 |
| CCP-5F.F | 7.0 |
| CP-3F | 12.0 |
| CCP-3F | 12.0 |
| ECCP-3 | 11.00 |

Beispiel 63

| | |
|---|---|
| PCH-3 | 14.00 |
| PCH-5F | 14.00 |
| PCH-7F | 14.00 |
| PCH-53 | 10.00 |
| CCP-3F | 6.00 |
| CCP-5F | 6.00 |
| CCP-3F.F | 5.00 |
| CBC-33 | 5.00 |
| CBC-53 | 5.00 |
| CBC-55 | 5.00 |
| CBC-33F | 5.00 |
| CBC-53F | 6.00 |
| CBC-55F | 5.00 |

Beispiel 64

| | |
|---|---|
| PCH-5F | 20.00 |
| PCH-6F | 15.00 |
| PCH-7F | 15.00 |
| CCP-3F.F | 10.00 |
| CCP-5F.F | 10.00 |
| CBC-33 | 5.00 |
| CBC-53 | 5.00 |
| CBC-55 | 5.00 |
| CBC-33F | 5.00 |
| CBC-53F | 5.00 |
| CBC-55F | 5.00 |

Beispiel 65

| | |
|---|---|
| PCH-3 | 16.00 |
| PCH-301 | 8.00 |
| CCP-30CF$_3$ | 9.00 |
| CCP-50CF$_3$ | 8.00 |
| CCP-3F.F | 8.00 |
| CCP-5F.F | 7.00 |
| ECCP-3F.F | 7.00 |
| CCP-3F | 6.00 |
| ECCP-3CF$_3$ | 7.00 |
| BCH-30CF$_3$ | 7.00 |
| PTP-102 | 4.00 |
| PTP-201 | 4.00 |
| CPTP-301 | 2.00 |
| CPTP-302 | 2.00 |
| CPTP-303 | 3.00 |

Beispiel 66

| | |
|---|---|
| PCH-3 | 18.00 |
| PCH-5F | 12.00 |
| PCH-6F | 12.00 |
| PCH-7F | 10.00 |
| CCP-3F.F | 7.00 |
| CCP-5F.F | 7.00 |
| ECCP-33 | 5.00 |
| CBC-33 | 5.00 |
| CBC-53 | 5.00 |
| CBC-55 | 4.00 |
| CBC-33F | 5.00 |
| CBC-53F | 5.00 |
| CBC-55F | 5.00 |

Beispiel 67

| | |
|---|---|
| PCH-3 | 10.00 |
| PCH-5F | 18.00 |
| PCH-6F | 14.00 |
| PCH-7F | 10.00 |
| CCP-3F.F | 9.00 |
| CCP-5F.F | 7.00 |
| CBC-33 | 5.00 |
| CBC-53 | 6.00 |
| CBC-55 | 5.00 |
| CBC-33F | 5.00 |
| CBC-53F | 6.00 |
| CBC-55F | 5.00 |

Beispiel 68

## Composition:

| | | |
|---|---|---|
| PCH-3 | 10.0 | % |
| PCH-5F | 18.0 | % |
| PCH-6F | 14.0 | % |
| PCH-7F | 10.0 | % |
| ECCP-3F | 9.0 | % |
| ECCP-5F | 7.0 | % |
| CBC-33 | 5.0 | % |
| CBC-53 | 6.0 | % |
| CBC-55 | 5.0 | % |
| CBC-33F | 5.0 | % |
| CBC-53F | 6.0 | % |
| CBC-55F | 5.0 | % |

| | | | | |
|---|---|---|---|---|
| S → N | | | <−20 | °C |
| Clearing point | | | +94 | °C |
| Viscosity | $\nu$ | +20 °C | 16 | $mm^2\ s^{-1}$ |
| Dielectric anisotropy | $\Delta\epsilon$ | 1 kHz, 20 °C | +4.1 | |
| | $\epsilon_{\parallel}$ | 1 kHz, 20 °C | 7.1 | |
| | $\epsilon_{\perp}$ | 1 kHz, 20 °C | 3.0 | |
| Optical anisotropy | | $\Delta n$ | +0.1006 | |
| (20 °C, 589 nm) | | $n_e$ | 1.5932 | |
| | | $n_o$ | 1.4926 | |

Beispiel 69

## Composition:

| | | |
|---|---|---|
| PCH-3 | 18.0 | % |
| PCH-5F | 12.0 | % |
| PCH-6F | 12.0 | % |
| PCH-7F | 10.0 | % |
| ECCP-3F | 7.0 | % |
| ECCP-5F | 7.0 | % |
| ECCP-33 | 5.0 | % |
| CBC-33 | 5.0 | % |
| CBC-53 | 5.0 | % |
| CBC-55 | 4.0 | % |
| CBC-33F | 5.0 | % |
| CBC-53F | 5.0 | % |
| CBC-55F | 5.0 | % |

| | | | | |
|---|---|---|---|---|
| S → N | | | <–40 | °C |
| Clearing point | | | +95 | °C |
| Viscosity | $\nu$ | +20 °C | 17 | $mm^2\ s^{-1}$ |

| | | | |
|---|---|---|---|
| Dielectric anisotropy | $\Delta\varepsilon$ | 1 kHz, 20 °C | +5.2 |
| | $\varepsilon_{\parallel}$ | 1 kHz, 20 °C | 8.4 |
| | $\varepsilon_{\perp}$ | 1 kHz, 20 °C | 3.2 |

| | | |
|---|---|---|
| Optical anisotropy | $\Delta n$ | +0.1050 |
| (20 °C, 589 nm) | $n_e$ | 1.5981 |
| | $n_o$ | 1.4931 |

Beispiel 70

## Composition:

| | | |
|---|---|---|
| PCH-3 | 7.0 | % |
| PCH-5F | 12.0 | % |
| PCH-6F | 12.0 | % |
| PCH-7F | 10.0 | % |
| ECCP-3F | 7.0 | % |
| ECCP-5F | 7.0 | % |
| PCH-53 | 8.0 | % |
| ECCP-33 | 5.0 | % |
| CBC-33 | 5.0 | % |
| CBC-53 | 6.0 | % |
| CBC-55 | 5.0 | % |
| CBC-33F | 5.0 | % |
| CBC-53F | 6.0 | % |
| CBC-55F | 5.0 | % |

| | | | | |
|---|---|---|---|---|
| S → N | | | <−20 | °C |
| Clearing point | | | +98 | °C |
| Viscosity | $\nu$ | +20 °C | 16 | $mm^2\ s^{-1}$ |

| | | | |
|---|---|---|---|
| Dielectric anisotropy | $\Delta\epsilon$ | 1 kHz, 20 °C | +3.2 |
| | $\epsilon_{\parallel}$ | 1 kHz, 20 °C | 6.0 |
| | $\epsilon_{\perp}$ | 1 kHz, 20 °C | 2.8 |

| | | |
|---|---|---|
| Optical anisotropy | $\Delta n$ | +0.1008 |
| (20 °C, 589 nm) | $n_e$ | 1.5942 |
| | $n_o$ | 1.4934 |

| Beispiele | 71 | 72 |
|---|---|---|
| S → N [°C] | <0 | <0 |
| Clearing point [°C] | +100 | +101 |
| Viscosity [$mm^2 s^{-1}$] 20 °C | 16 | 16 |
| Δn (20 °C, 589 nm) | +0.086 | +0.086 |
| $n_e$ (20 °C, 589 nm) | 1.558 | 1.556 |
| $V_{(10,0,20)}$ | 2.33 | 2.38 |
| $V_{(50,0,20)}$ | 2.86 | 2.92 |
| $V_{(90,0,20)}$ | 3.52 | 3.62 |
| Composition [%]: | BPCH-3OCF3 13.0 | BPCH-3OCF3 13.0 |
| | PCH-7F 10.0 | BPCH-5OCF3 10.0 |
| | CCP-2OCF3 10.0 | CCP-2OCF3 10.0 |
| | CCP-3OCF3 13.0 | CCP-3OCF3 13.0 |
| | CCP-4OCF3 7.0 | CCP-4OCF3 7.0 |
| | CCP-5OCF3 11.0 | CCP-5OCF3 11.0 |
| | BCCP-3F.F 10.0 | BCCP-3F.F 10.0 |
| | BCCP-5F.F 8.0 | BCCP-5F.F 8.0 |
| | BCCP-3F 11.0 | BCCP-3F 11.0 |
| | CBC-33F 3.0 | CBC-33F 3.0 |
| | CBC-53F 2.0 | CBC-53F 2.0 |
| | CBC-55F 2.0 | CBC-55F 2.0 |

Die erfindungsgemäßen Flüssigkristallmischungen können neben der Komponente B und ggf. A und C noch weitere Zusätze wie beispielsweise chirale Dotierstoffe, isotrope Zusätze zur Modifizierung verschiedener Parameter, pleochroitische Farbstoffe, etc. enthalten. Die Komponenten A, B und C bestehen vorzugsweise überwiegend aus den angegebenen Verbindungen (d.h. zu mehr als 50 %, insbesondere zu mehr als 60 %). Vorzugsweise bestehen jedoch die Komponenten A, B und C im wesentlichen aus den angegebenen Verbindungen (d.h. zu mehr als 80 %, insbesondere zu 100 %).

## Patentansprüche

**1.** Matrix-Flüssigkristallanzeige mit

- zwei planparallelen Tragerplatten, die mit einer Umrandung eine Zelle bilden,
- integrierten nicht-linearen Elementen zur Schaltung einzelner Bildpunkte auf den Trägerplatten und
- einer in der Zelle befindlichen nematischen Flüssigkristallmischung mit positiver dielektrischer Anisotropie und hohem spezifischem Widerstand,

dadurch gekennzeichnet, daß die Flüssigkristallmischung auf folgenden Komponenten basiert:

a) mindestens 10 Gew.% einer flüssigkristallinen Komponente B bestehend aus einer oder mehreren Verbindungen mit einer dielektrischen Anisotropie von über +1,5,

b) bis zu 90 Gew.% einer flüssigkristallinen Komponente A bestehend aus einer oder mehreren Verbindungen mit einer dielektrischen Anisotropie von -1,5 bis +1,5 der allgemeinen Formel I

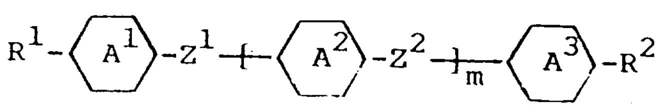 I

worin

| | |
|---|---|
| $R^1$ und $R^2$ | jeweils unabhängig voneinander n-Alkyl ω-Fluoralkyl oder n-Alkenyl mit bis zu 9 C-Atomen, |
| die Ringe $A^1$, $A^2$ und $A^3$ | jeweils unabhängig voneinander 1,4-Phenylen, 2- oder 3-Fluor-1,4- |

phenylen, trans-1,4-Cyclohexylen oder 1,4-Cyclohexenylen,

$Z^1$ und $Z^2$ jeweils unabhängig voneinander $-CH_2CH_2-$ oder eine Einfachbindung,

und

m 0, 1 oder 2 bedeutet, und

c) 0 bis 20 Gew.% einer flüssigkristallinen Komponente C bestehend aus einer oder mehreren Verbindungen mit einer dielektrischen Anisotropie von unter -1,5,

und die nematische Flüssigkristallmischung einen nematischen Phasenbereich von mindestens 60 °C, eine Viskositat bei 20 °C von maximal 30 mPa.s und eine mittlere Dielektrizitätskonstante $\bar{\epsilon} \leqq 8$ aufweist.

**2.** Anzeige nach Anspruch 1, dadurch gekennzeichnet, daß Komponente B im wesentlichen aus nitrilhaltigen Verbindungen besteht.

**3.** Anzeige nach Anspruch 1, dadurch gekennzeichnet, daß Komponente B nitrilhaltige und nitrilfreie, fluorierte Verbindungen enthält.

**4.** Anzeige nach Anspruch 1, dadurch gekennzeichnet, daß Komponente B im wesentlichen aus nitrilfreien, fluorierten Verbindungen besteht.

**5.** Anzeige nach einem der Ansprüche 1 bis 4, dadurch gekennzeichnet, daß Komponente B eine oder mehrere Verbindungen ausgewählt aus der Gruppe bestehend aus Verbindungen der Formeln IIa bis IIf enthält,

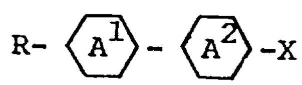
IIa

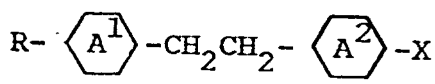
IIb

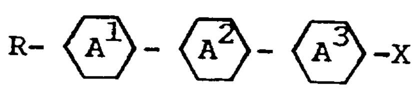
IIc

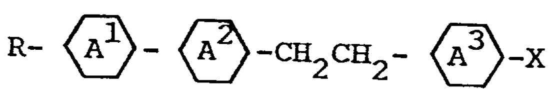
IId

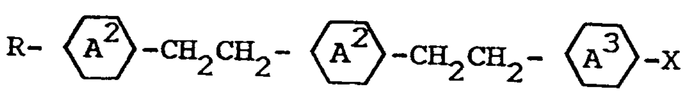
IIe

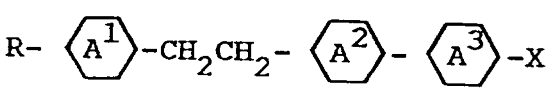
IIf

worin

R n-Alkyl oder n-Alkenyl mit bis zu 9 C-Atomen,

X Cyan, -NCS, F, Cl, $CF_3$, $-CHF_2$, $-OCF_3$, $-OCHF_2$, $-OCF_2CF_2H$ oder $-OC_2F_5$,

und

die Ringe $A^1$, $A^2$ und $A^3$ jeweils unabhängig voneinander 1,4-Phenylen, 2- oder 3-Fluor-1,4-phenylen, 2,3-Difluor-1,4-phenylen, trans-1,4-Cyclohexylen oder 1,4-Cyclohexenylen

bedeuten, wobei das Verhältnis nitrilfreie : nitrilhaltige Verbindungen aus Komponente B > 2 : 1 ist.

**6.** Anzeige nach Anspruch 5, dadurch gekennzeichnet, daß Komponente B Verbindungen der Formeln IIa bis IIf, worin X Cyan bedeutet, und Verbindungen der Formeln IIa bis IIf, worin X -NCS, F, Cl, $-CF_3$, $-CHF_2$, $-OCF_3$, $OCHF_2$, $-OCF_2CF_2H$ oder $-OC_2F_5$ bedeutet, enthält und der Anteil der Cyanverbindungen in Komponente B 0 bis 50 Gew.% beträgt.

**7.** Anzeige nach Anspruch 6, dadurch gekennzeichnet, daß Komponente B keine Verbindungen der Formeln IIa bis IIf, worin X Cyan bedeutet, enthält.

8. Anzeige nach mindestens einem der Ansprüche 5 bis 7 dadurch gekennzeichnet, daß X F, Cl, $CF_3$, $-OCF_3$, $-OCHF_2$ oder $CHF_2$ bedeutet.

9. Anzeige nach mindestens einem der Ansprüche 1 bis 8, dadurch gekennzeichnet, daß Komponente A eine oder mehrere Verbindungen ausgewählt aus der Gruppe bestehend aus II1 bis II7 enthält:

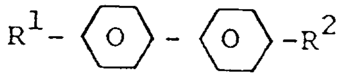 II1

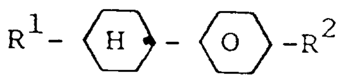 II2

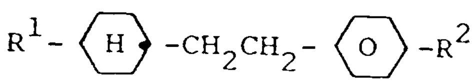 II3

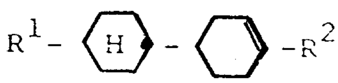 II4

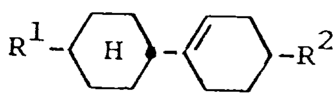 II5

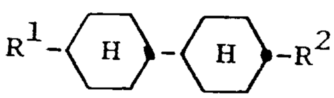 II6

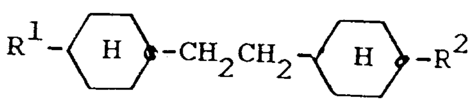 II7

worin $R^1$ und $R^2$ die in Anspruch 1 angegebene Bedeutung haben.

10. Anzeige nach Anspruch 9, dadurch gekennzeichnet, daß Komponente A zusätzlich eine oder mehrere Verbindungen ausgewählt aus der Gruppe bestehend aus II8 bis II20 enthält:

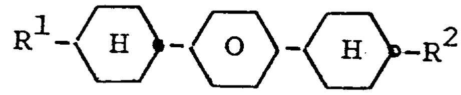
II8

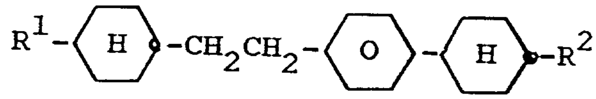
II9

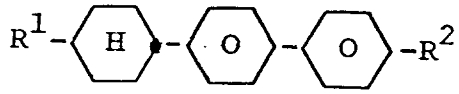
II10

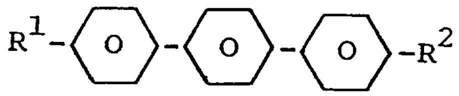
II11

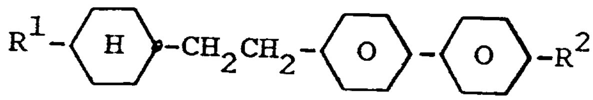
II12

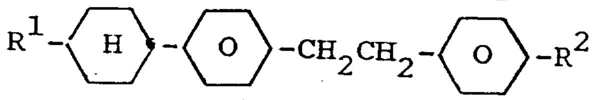
II13

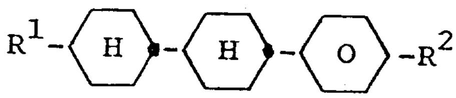
II14

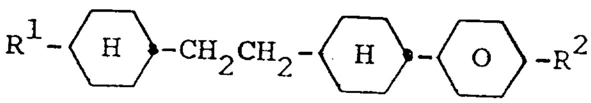
II15

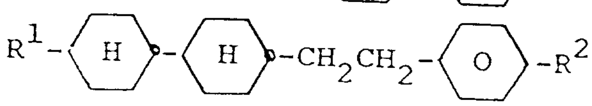
II16

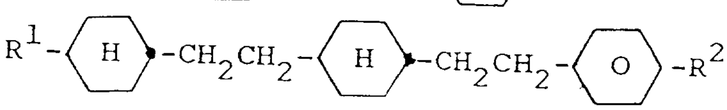
II17

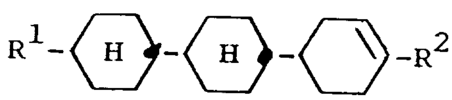
II18

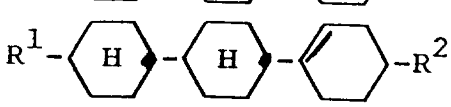
II19

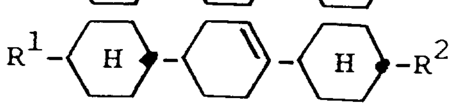
II20

worin $R^1$ und $R^2$ die in Anspruch 1 angegebene Bedeutung haben und die 1,4-Phenylengruppen in II8 bis II17 jeweils unabhängig voneinander auch durch Fluor ein- oder mehrfach substituiert sein konnen.

**11.** Anzeige nach Anspruch 9 oder 10, dadurch gekennzeichnet, daß Komponente A zusätzlich eine oder mehrere Verbindungen ausgewählt aus der Gruppe bestehend aus II21 bis II25 enthält:

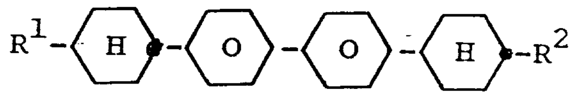
II21

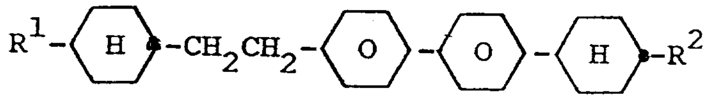
II22

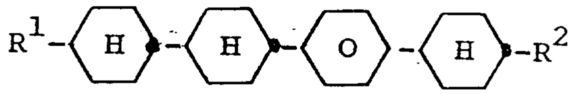
II23

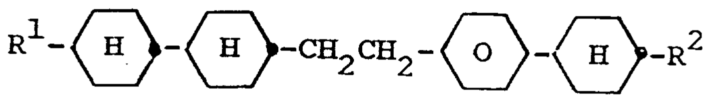
II24

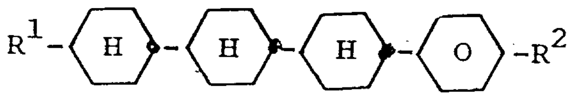
II25

worin $R^1$ und $R^2$ die in Anspruch 1 angegebene Bedeutung haben und die 1,4-Phenylengruppen in II21 bis II25 jeweils unabhängig voneinander auch durch Fluor ein- oder mehrfach substituiert sein können.

**12.** Anzeige nach mindestens einem der Ansprüche 1 bis 11, dadurch gekennzeichnet, daß Komponente A eine oder mehrere Verbindungen ausgewählt aus der Gruppe bestehend aus II26 und II27 enthält:

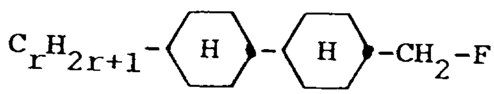
II26

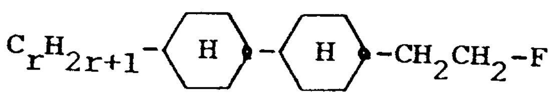
II27

worin $C_rH_{2r+1}$ eine geradkettige Alkylgruppe mit bis zu 7 C-Atomen ist.

**13.** Anzeige nach mindestens einem der Ansprüche 1 bis 12, dadurch gekennzeichnet, daß die Flüssigkristallmischung neben den Komponenten A, B und C zusätzlich eine oder mehrere Verbindungen ausgewählt aus der Gruppe bestehend aus III und IV enthält:

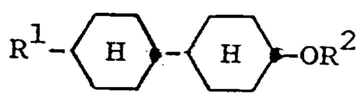
III

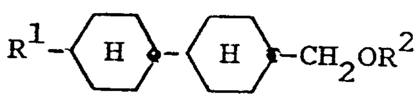
IV

worin $R^1$ und $R^2$ die in Anspruch 1 angegebene Bedeutung haben.

**14.** Anzeige nach mindestens einem der Ansprüche 1 bis 13, dadurch gekennzeichnet, daß die Flüssigkristallmischung neben den Komponenten A, B und C zusätzlich eine oder mehrere Verbindungen der Formel

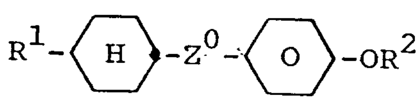

enthält,
worin

$R^1$ und $R^2$ die in Anspruch 1 angegebene Bedeutung haben
und
$Z^0$ eine Einfachbindung, $-CH_2CH_2-$,

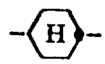

oder

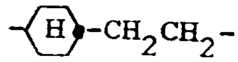

bedeutet.

**15.** Anzeige nach mindestens einem der Ansprüche 1-14, dadurch gekennzeichnet, daß die Flussigkristallmischung neben den Komponenten A, B und C zusätzlich eine oder mehrere Verbindungen ausgewählt aus der Gruppe bestehend aus V und VI enthält:

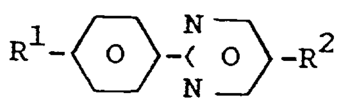

V

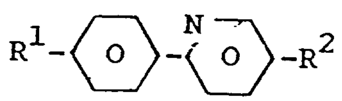

VI

worin $R^1$ und $R^2$ die in Anspruch 1 angegebene Bedeutung haben.

**16.** Anzeige nach mindestens einem der Ansprüche 1-15, dadurch gekennzeichnet, daß die Flüssigkristallmischung neben den Komponenten A, B und C zusätzlich eine oder mehrere Verbindungen ausgewählt aus der Gruppe bestehend aus VII bis XI enthält:

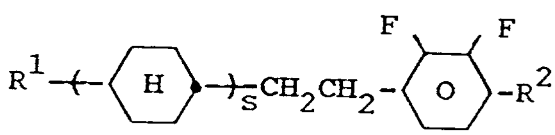

VII

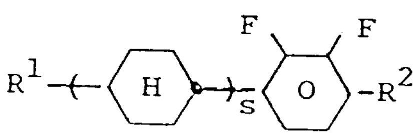

VIII

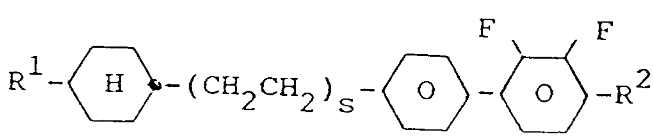

IX

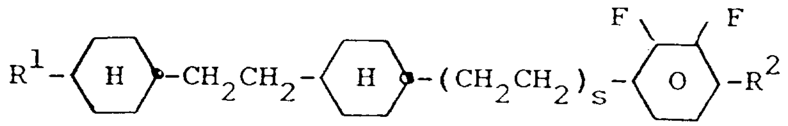 X

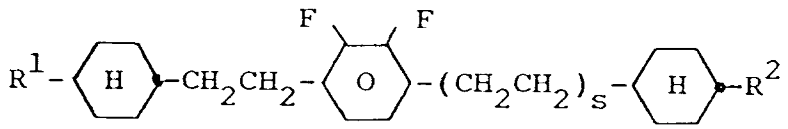 XI

worin

$R^1$ und $R^2$ die in Anspruch 1 angegebene Bedeutung haben

und

s 0 oder 1 ist.

**17.** Flüssigkristallmischung der in Anspruch 5 definierten Zusammensetzung.

**18.** Flüssigkristallmischung nach Anspruch 17, dadurch gekennzeichnet, daß sie frei ist von dielektrisch neutralen Komponenten enthaltend aromatisch gebundenes Alkoxy oder Ester-Funktionen.

**19.** Flüssigkristallmischung nach Anspruch 17 oder 18, dadurch gekennzeichnet, daß sie lediglich auf Komponente B basiert.

**20.** Flüssigkristallmischung nach Anspruch 19, dadurch gekennzeichnet, daß X in den Teilformeln IIa bis IIf F, Cl, $CF_3$, $OCF_3$, $OCHF_2$ oder $CHF_2$ bedeutet.

**Claims**

**1.** Matrix liquid-crystal display containing

- two plane parallel support plates which together with a frame form a cell,
- integrated non-linear elements for switching individual picture elements on the support plates and
- a nematic liquid-crystal mixture which is present in the cell and has a positive dielectric anisotropy and high resistivity,

characterized in that the liquid-crystal mixture is based on the following components:

a) at least 10% by weight of a liquid-crystalline component B comprising one or more compounds having a dielectric anisotropy of more than +1.5,

b) up to 90% by weight of a liquid-crystalline component A comprising one or more compounds having a dielectric anisotropy of -1.5 to +1.5 of the general formula I

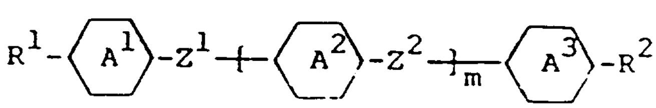 I

in which

$R^1$ and $R^2$ are each, independently of one another, n-alkyl, ω-fluoroalkyl or n-alkenyl having up to 9 carbon atoms,

the rings $A^1$, $A^2$ and $A^3$ are each, independently of one another, 1,4-phenylene, 2- or 3-fluoro-1,4-phenylene, trans-1,4-cyclohexylene or 1,4-cyclohexenylene,

$Z^1$ and $Z^2$ are each, independently of one another, $-CH_2CH_2-$ or a single bond,

and

m is 0, 1 or 2, and

c) 0 to 20% by weight of a liquid-crystalline component C comprising one or more compounds having a dielectric anisotropy of less than -1.5,

and the nematic liquid-crystal mixture has a nematic phase range of at least 60 °C, a maximum viscosity at 20 °C of 30 mPa.s and a mean dielectricity constant $\bar{\epsilon} \leq 8$.

2. Display according to Claim 1, characterized in that component B essentially consists of nitrile-containing compounds.

3. Display according to Claim 1, characterized in that component B contains nitrile-containing and nitrile-free, fluorinated compounds.

4. Display according to Claim 1, characterized in that component B essentially consists of nitrile-free, fluorinated compounds.

5. Display according to one of Claims 1 to 4, characterized in that component B contains one or more compounds selected from the group consisting of compounds of the formulae IIa to IIf

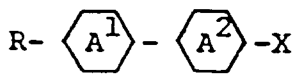
IIa

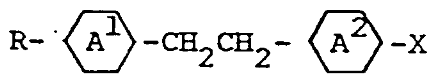
IIb

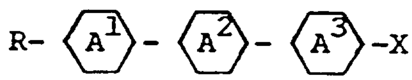
IIc

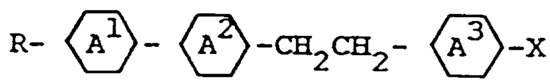
IId

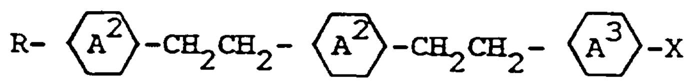
IIe

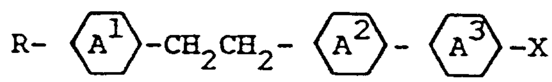
IIf

in which

| | |
|---|---|
| R | is n-alkyl or n-alkenyl of up to 9 carbon atoms, |
| X | is cyano, -NCS, F, Cl, $-CF_3$, $-CHF_2$, $-OCF_3$, $-OCHF_2$, $-OCF_2CF_2H$ or $-OC_2F_5$, and |
| the rings $A^1$, $A^2$ and $A^3$ | are each, independently of one another, 1,4-phenylene, 2- or 3-fluoro-1,4-phenylene, 2,3-difluoro-1,4-phenylene, trans-1,4-cyclohexylene or 1,4-cyclohexenylene, |

the ratio of nitrile-free to nitrile-containing compounds in component B being >2:1.

6. Display according to Claim 5, characterized in that component B contains compounds of the formulae IIa to IIf in which X is cyano and compounds of the formulae IIa to IIf in which X is -NCS, F, Cl, $-CF_3$, $-CHF_2$, $-OCF_3$, $-OCHF_2$, $-OCF_2CF_2H$ or $-OC_2F_5$ and the amount of cyano compounds in component B is 0 to 50% by weight.

7. Display according to Claim 6, characterized in that component B does not contain any compounds of the formulae IIa to IIf in which X is cyano.

8. Display according to at least one of Claims 5 to 7, characterized in that X is F, Cl, $CF_3$, $-OCF_3$, $-OCHF_2$ or $-CHF_2$.

9. Display according to at least one of Claims 1 to 8, characterized in that component A contains one or more compounds selected from the group consisting of II1 to II7:

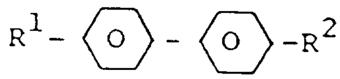
II1

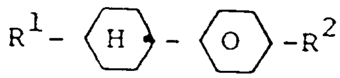
II2

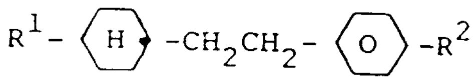
II3

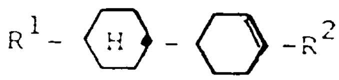
II4

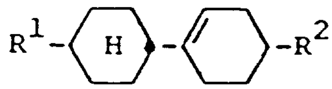
II5

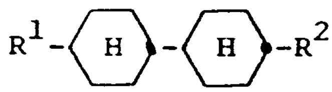
II6

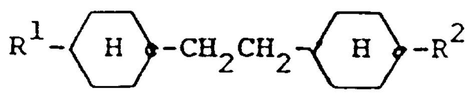
II7

in which $R^1$ and $R^2$ have the meaning given in Claim 1.

**10.** Display according to Claim 9, characterized in that component A additionally contains one or more compounds selected from the group consisting of II8 to II20:

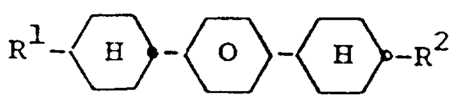
II8

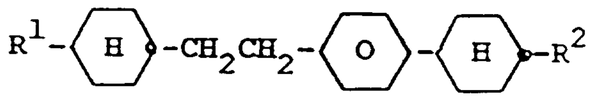 II9

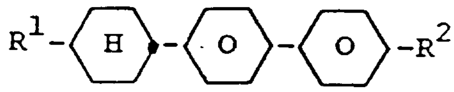 II10

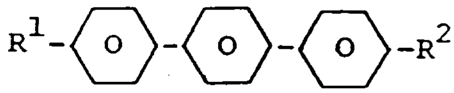 II11

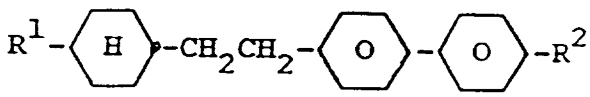 II12

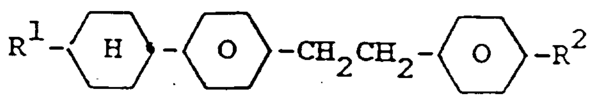 II13

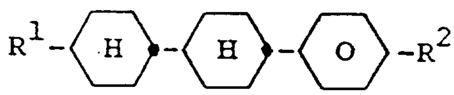 II14

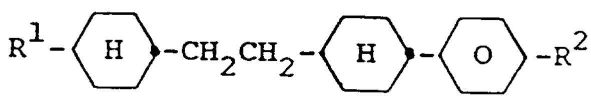 II15

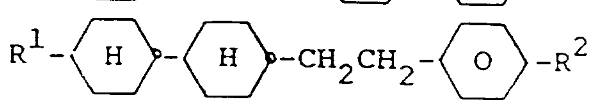 II16

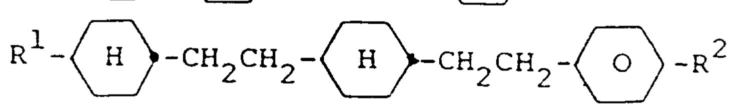 II17

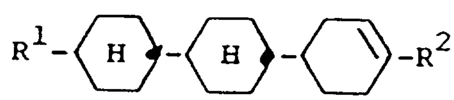 II18

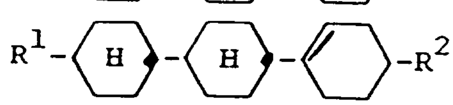 II19

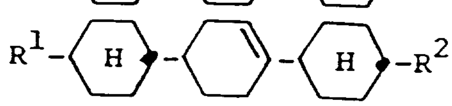 II20

in which $R^1$ and $R^2$ have the meaning given in Claim 1 and the 1,4-phenylene groups in II8 to II17 can each, independently of one another, also be mono- or polysubstituted by fluorine.

**11.** Display according to Claim 9 or 10, characterized in that component A additionally contains one or more compounds selected from the group consisting of II21 to II25:

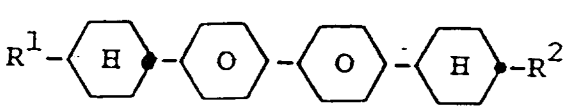 II21

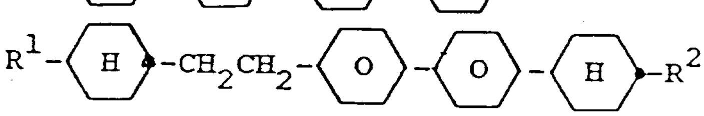 II22

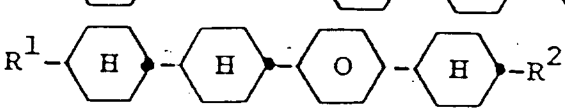 II23

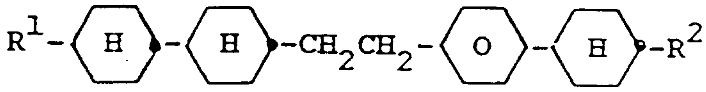 II24

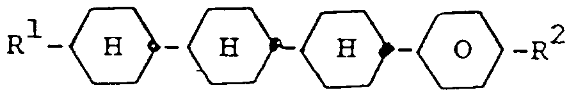 II25

in which $R^1$ and $R^2$ have the meaning given in Claim 1 and the 1,4-phenylene groups in II21 to II25 can each, independently of one another, also be mono- or polysubstituted by fluorine.

**12.** Display according to at least one of Claims 1 to 11, characterized in that component A contains one or more compounds selected from the group consisting of II26 and II27:

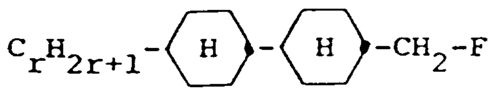 II26

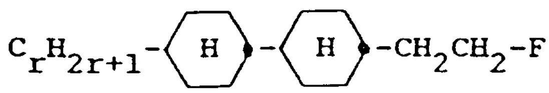 II27

in which $C_rH_{2r+1}$ is a straight-chain alkyl group of up to 7 carbon atoms.

**13.** Display according to at least one of Claims 1 to 12, characterized in that the liquid-crystal mixture additionally contains, in addition to components A, B and C, one or more compounds selected from the group consisting of III and IV:

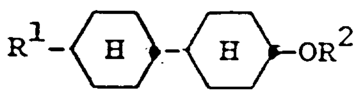 III

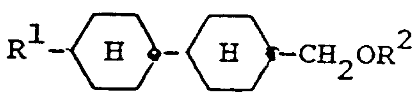 IV

in which $R^1$ and $R^2$ have the meaning given in Claim 1.

**14.** Display according to at least one of Claims 1 to 13, characterized in that the liquid-crystal mixture additionally contains, in addition to components A, B and C, one or more compounds of the formula

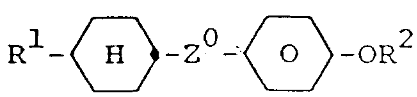

in which
$R^1$ and $R^2$ have the meaning given in Claim 1
and
$Z^0$ is a single bond, $-CH_2CH_2-$,

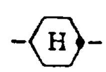

or

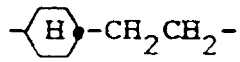

**15.** Display according to at least one of Claims 1-14, characterized in that the liquid-crystal mixture additionally contains, in addition to compounds A, B and C, one or more compounds selected from the group consisting of V and VI:

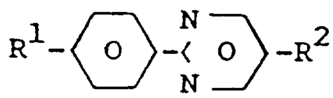

V

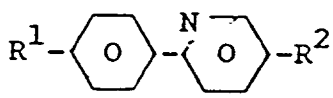

VI

in which $R^1$ and $R^2$ have the meaning given in Claim 1.

**16.** Display according to at least one of Claims 1-15, characterized in that the liquid-crystal mixture additionally contains, in addition to components A, B and C, one or more compounds selected from the group consisting of VII to XI:

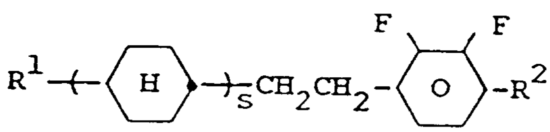

VII

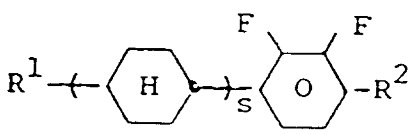

VIII

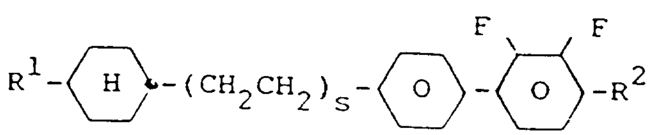

IX

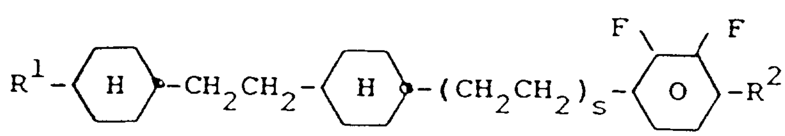

X

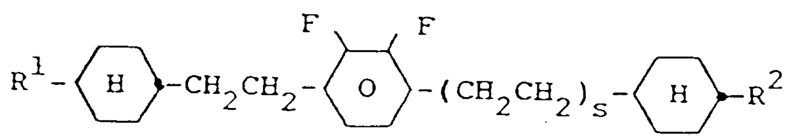

XI

in which

$R^1$ and $R^2$ have the meaning given in Claim 1

and

s is 0 or 1.

**17.** Liquid-crystal mixture of the composition defined in Claim 5.

**18.** Liquid-crystal mixture according to Claim 17, characterized in that it is free from dielectrically neutral components containing aromatically bonded alkoxy or ester functions.

**19.** Liquid-crystal mixture according to Claim 17 or 18, characterized in that it is based only on component B.

**20.** Liquid-crystal mixture according to Claim 19, characterized in that X in the sub-formulae IIa to IIf is F, Cl, $CF_3$, $OCF_3$, $OCHF_2$ or $CHF_2$.

## Revendications

**1.** Afficheur matriciel à cristaux liquides comportant
- deux plaques de support à faces parallèles qui, avec un bord, forment une cellule,
- des éléments non linéaires pour la commutation de points d'image individuels sur les plaques de support et
- une composition de cristaux liquides nématiques se trouvant dans la cellule, à anisotropie diélectrique positive et haute résistance spécifique,

caractérisé en ce que la composition de cristaux liquides est à base des composants suivants:

a) au moins 10 % en poids d'un composant B de type cristal liquide, constitué d'un ou plusieurs composés ayant une anisotropie diélectrique supérieure à +1,5,

b) jusqu'à 90 % en poids d'un composant A de type cristal liquide, constitué d'un ou plusieurs composés ayant une anisotropie diélectrique de -1,5 à +1,5, de formule générale I

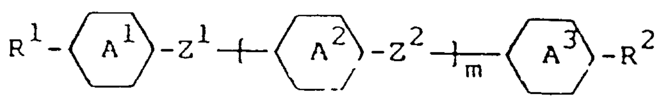 I

dans laquelle

| | |
|---|---|
| $R^1$ et $R^2$ | représentent chacun, indépendamment l'un de l'autre, un groupe n-alkyle, ω-fluoroalkyle ou n-alcényle ayant jusqu'à 9 atomes de carbone, |
| les cycles $A^1$, $A^2$ et $A^3$ | représentent chacun, indépendamment les uns des autres, un groupe 1,4-phénylène, 2-ou 3-fluoro-1,4-phénylène, *trans*-1,4-cyclohexylène ou 1,4-cyclohexénylène, |
| $Z^1$ et $Z^2$ | représentent chacun, indépendamment l'un de l'autre,-$CH_2CH_2$- ou une simple liaison, et |
| m | représente 0, 1 ou 2, et |

c) 0 à 20 % en poids d'un composant C de type cristal liquide, constitué d'un ou plusieurs composés ayant une anisotropie diélectrique inférieure à -1,5,

et la composition de cristaux liquides nématiques présente une plage de phase nématique d'au moins 60 °C, une viscosité à 20 °C d'au maximum 30 mPa.s et une constante diélectrique moyenne $\bar{\epsilon} \leq 8$.

**2.** Afficheur selon la revendication 1, caractérisé en ce que le composant B est essentiellement constitué de composés contenant des groupes nitrile.

**3.** Afficheur selon la revendication 1, caractérisé en ce que le composant B contient des composés fluorés exempts de groupe nitrile et des composés fluorés contenant des groupes nitrile.

**4.** Afficheur selon la revendication 1, caractérisé en ce que le composant B consiste essentiellement en composés fluorés exempts de groupe nitrile.

**5.** Afficheur selon l'une des revendications 1 à 4, caractérisé en ce que le composant B contient un ou plusieurs composés choisis parmi des composés de formules IIa à IIf

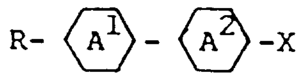 IIa

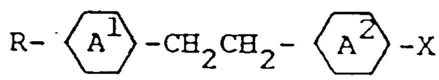 IIb

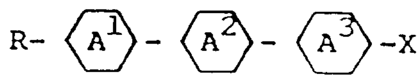 IIc

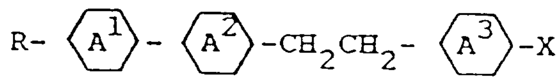 IId

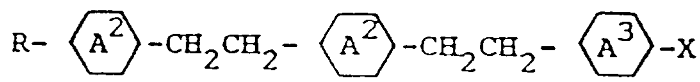 IIe

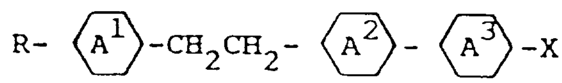 IIf

dans lesquelles

R représente un groupe n-alkyle ou n-alcényle ayant jusqu'à 9 atomes de carbone,

X représente F, Cl ou le groupe cyano, -NCS, $-CF_3$, $-CHF_2$, $-OCF_3$, $-OCHF_2$, $-OCF_2CF_2H$ ou $-OC_2F_5$,

et

les cycles $A^1$, $A^2$ et $A^3$ représentent chacun, indépendamment les uns des autres, le groupe 1,4-phénylène, 2- ou 3-fluoro-1,4-phénylène, 2,3-difluoro-1,4-phénylène, *trans*-1,4-cyclohexylène ou 1,4-cyclohexénylène,

le rapport des composés exempts de groupe nitrile aux composés contenant des groupes nitriles du composant B est > 2:1.

**6.** Afficheur selon la revendication 5, caractérisé en ce que le composant B contient des composés de formules IIa à IIf, dans lesquelles X représente le groupe cyano, et des composés de formules IIa à IIf dans lesquelles X représente -NCS, F, Cl, $-CF_3$, $-CHF_2$, $-OCF_3$, $-OCHF_2$, $-OCF_2CF_2H$ ou $-OC_2F_5$, et la proportion des groupes cyano dans le composant B va de 0 à 50 % en poids.

**7.** Afficheur selon la revendication 6, caractérisé en ce que le composant B ne contient pas de composés de formules IIa à IIf dans lesquelles X représente le groupe cyano.

**8.** Afficheur selon au moins l'une des revendications 5 à 7, caractérisé en ce que X représente F, Cl, $-CF_3$, $-OCF_3$, $-OCHF_2$ ou $-CHF_2$.

**9.** Afficheur selon au moins l'un des revendications 1 à 8, caractérisé en ce que le composant A contient un ou plusieurs composés choisis parmi ceux de formules II1 à II7:

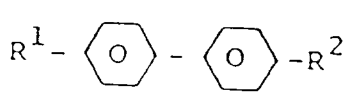 II1

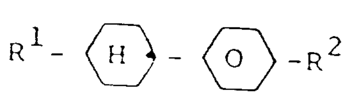 II2

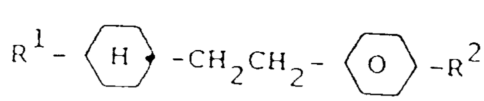 II3

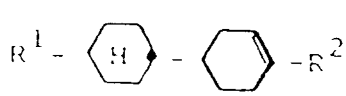 II4

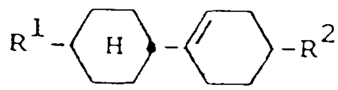 II5

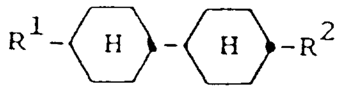 II6

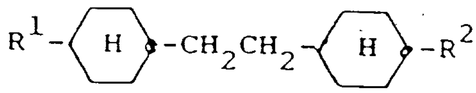 II7

dans lesquelles $R^1$ et $R^2$ ont les significations données dans la revendication 1.

**10.** Afficheur selon la revendication 9, caractérisé en ce que le composant A contient en outre un ou plusieurs composés choisis parmi ceux de formules II8 à II20:

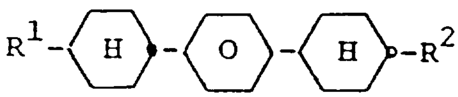 II8

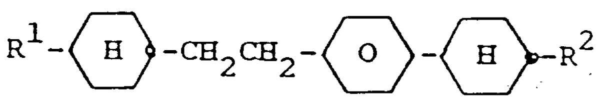 II9

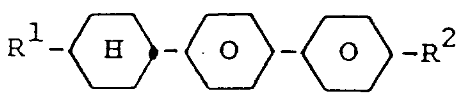 II10

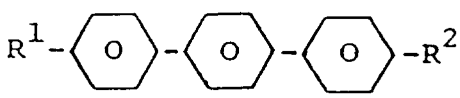 II11

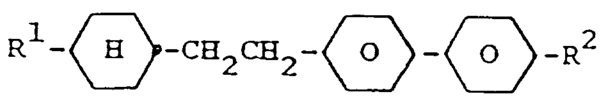 II12

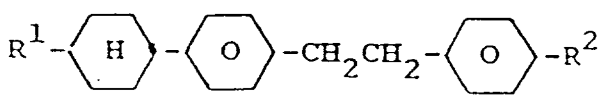 II13

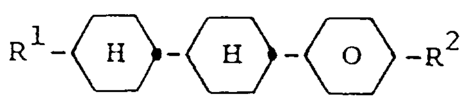 II14

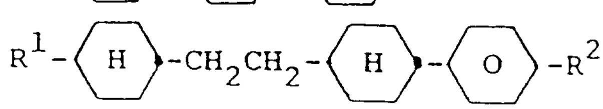 II15

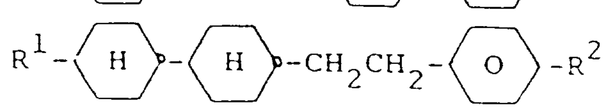 II16

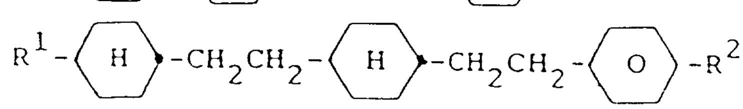 II17

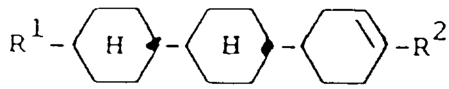
II18

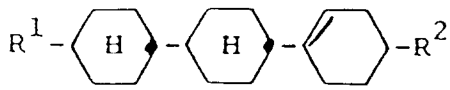
II19

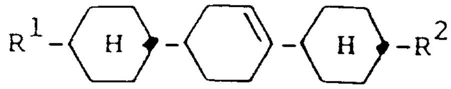
II20

dans lesquelles $R^1$ et $R^2$ ont les significations données dans la revendication 1 et les groupes 1,4-phénylène dans les formules II8 à II17 peuvent également être une ou plusieurs fois substitués chacun, indépendamment les uns des autres, par le fluor.

**11.** Afficheur selon la revendication 9 ou 10, caractérisé en ce que le composant A contient en outre un ou plusieurs composés choisis parmi ceux de formules II21 à II25:

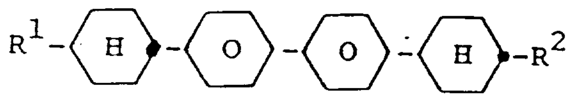
II21

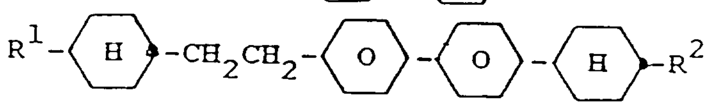
II22

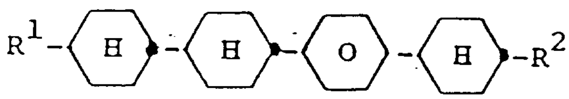
II23

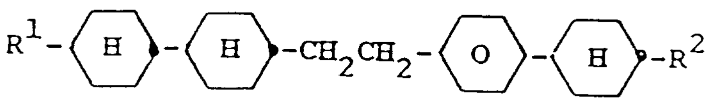
II24

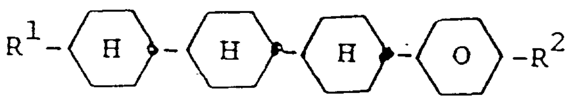
II25

dans lesquelles $R^1$ et $R^2$ ont les significations données dans la revendication 1 et les groupes 1,4-phénylène dans les formules II21 à II25 peuvent également être une ou plusieurs fois substitués chacun, indépendamment les uns des autres, par le fluor.

**12.** Afficheur selon au moins l'une des revendications 1 à 11, caractérisé en ce que le composant A contient un ou plusieurs composés choisis parmi ceux de formules II26 et II27:

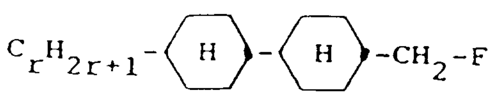
II26

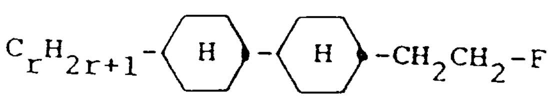
II27

dans lesquelles $C_rH_{2r+1}$ est un groupe alkyle à chaîne droite ayant jusqu'à 7 atomes de carbone.

**13.** Afficheur selon au moins l'une des revendications 1 à 12, caractérisé en ce que, en plus des composants A, B et C, la composition de cristaux liquides contient en outre un ou plusieurs composés choisis parmi ceux de formules III et IV:

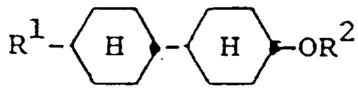 III

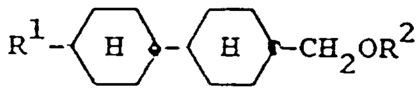 IV

dans lesquelles $R^1$ et $R^2$ ont les significations données dans la revendication 1.

**14.** Afficheur selon au moins l'une des revendications 1 à 13, caractérisé en ce que, en plus des composants A, B et C, la composition de cristaux liquides contient en outre un ou plusieurs composés de formule

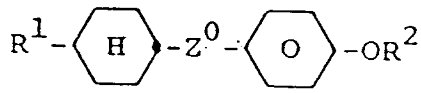

dans laquelle

$R^1$ et $R^2$ ont les significations données dans la revendication 1 et

$Z^0$ représente une simple liaison, $-CH_2CH_2-$,

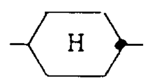

ou

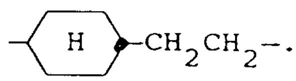

**15.** Afficheur selon au moins l'une des revendications 1 à 14, caractérisé en ce que, en plus des composants A, B et C, la composition de cristaux liquides contient en outre un ou plusieurs composés choisis parmi ceux de formules V et VI:

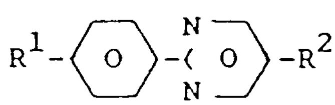 V

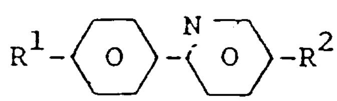 VI

dans lesquelles $R^1$ et $R^2$ ont les significations données dans la revendication 1.

**16.** Afficheur selon au moins l'une des revendications 1 à 15, caractérisé en ce que, en plus des composants A, B et C, la composition de cristaux liquides contient en outre un ou plusieurs composés choisis parmi ceux de formules VII à XI:

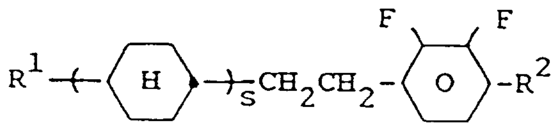

VII

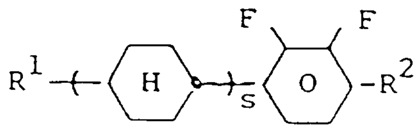

VIII

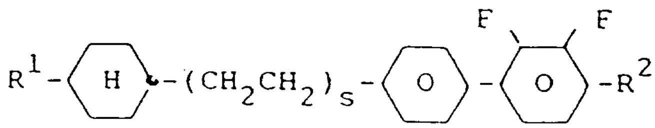

IX

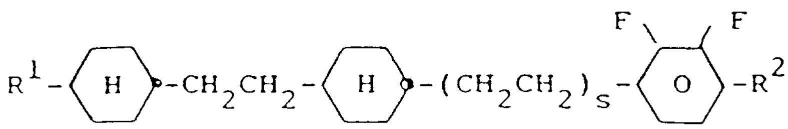

X

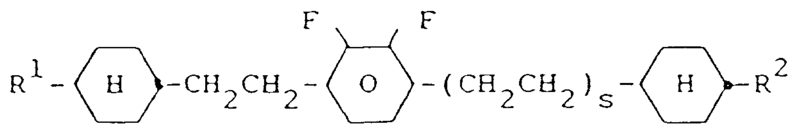

XI

dans lesquelles

$R^1$ et $R^2$ ont les significations données dans la revendication 1 et

s est 0 ou 1.

**17.** Composition de cristaux liquides ayant la composition définie dans la revendication 5.

**18.** Composition de cristaux liquides selon la revendication 17, caractérisée en ce qu'elle est exempte de composants diélectriquement neutres qui contiennent des fonctions ester ou alcoxy liées à un groupe aromatique.

**19.** Composition de cristaux liquides selon la revendication 17 ou 18, caractérisée en ce qu'elle est seulement à base du composant B.

**20.** Composition de cristaux liquides selon la revendication 19, caractérisée en ce que, dans les sous-formules IIa à IIf, X représente F, Cl, $CF_3$, $OCF_3$, $OCHF_2$ ou $CHF_2$.